# EUROPEAN PATENT SPECIFICATION

(11) **EP 2 889 210 B1**
(45) Date of publication and mention of the grant of the patent: **23.08.2017**
(21) Application number: 14197464.2
(22) Date of filing: 11.12.2014
(51) Int. Cl.: B62K 5/10

(54) **Rocking control system of a rocking vehicle**
Schaukelsteuersystem eines Schaukelfahrzeugs
Système de commande de basculement d'un véhicule à bascule

(30) Priority: 27.12.2013 JP 2013272470
(43) Date of publication of application: 01.07.2015
(73) Proprietor: HONDA MOTOR CO., LTD., Tokyo, 107-8556 (JP)
(72) Inventor: Kawasaki, Yohei, Saitama, 351-0193 (JP); Fujita, Masayuki, Saitama, 351-0193 (JP); Iguchi, Kazunari, Saitama, 351-0193 (JP); Miyagishi, Syunichi, Saitama, 351-0193 (JP)
(74) Representative: Kiwit, Benedikt

(56) References cited:
- EP-A1- 2 046 589
- EP-A1- 2 151 367
- EP-A1- 2 810 861
- EP-A2- 2 196 386
- EP-B1- 1 572 526
- EP-B1- 2 300 308
- WO-A1-2011/029795
- CA-A1- 2 652 789
- GB-A- 2 444 250
- US-A- 3 938 609
- US-A1- 2004 188 167

## Description

The present invention relates to a rocking control system of a rocking vehicle.

Conventionally, there has been known a front-two-wheel type rocking vehicle where a pair of left and right front wheels is rockable in the lateral direction in response to rocking of a vehicle body in the lateral direction in a state where the pair of left and right front wheels is in contact with a ground (see Patent Literature 1, for example).

In the rocking vehicle described in Patent Literature 1, a rocking mechanism which allows the vehicle body to rock in the lateral direction includes an attenuation force generating device which imparts an attenuation force to the lateral rocking of the vehicle body.

Patent document EP 2 151 367 A1 is considered the closest prior art document and discloses the following features of claim 1; A rocking control system of a rocking vehicle comprising:a pair of left and right wheels;a rocking mechanism which rocks the pair of left and right wheels in the lateral direction in response to rocking of a vehicle body in the lateral direction in a state where the left and right wheels are in contact with a ground; anda rocking damper which imparts an attenuation force to the rocking of the vehicle body in the lateral direction, wherein the rocking damper sets an attenuation force generated when the vehicle body is raised lower than an attenuation force generated when the vehicle body falls.

Patent Literature 1: JP-A-2011-195100

To consider the case where a rocking vehicle becomes large-sized, rocking energy of a vehicle body also becomes large and hence, it is necessary to increase an attenuation force corresponding to the increase of rocking energy.

However, when the attenuation force is simply increased, although a rider can hold the feeling of safety from rocking of the vehicle body, there arises a drawback that a light rolling feeling that the rider can enjoy is decreased.

The invention has been made in view of such circumstances, and it is an object of the invention to allow, in a rocking control system of a rocking vehicle where a pair of left and right wheels is rockable together with a vehicle body while holding the pair of left and right wheels in contact with a ground, a rider to surely have a light rolling feeling while maintaining the feeling of safety from rocking of the vehicle body.

As a means for solving the above-mentioned drawbacks, the invention described in claim 1 is directed to a rocking control system of a rocking vehicle (1) which includes: a pair of left and right wheels (2); a rocking mechanism (4) which rocks the pair of left and right wheels (2) in the lateral direction in response to rocking of a vehicle body in the lateral direction in a state where the left and right wheels (2) are in contact with a ground; and a rocking damper (38) which imparts an attenuation force to the rocking of the vehicle body in the lateral direction, wherein the rocking damper (38) sets an attenuation force generated when the vehicle body is raised lower than an attenuation force generated when the vehicle body falls.

The invention described in claim 2 is characterized in that the rocking damper (38) includes a hydraulic circuit (90, 90', 110) which controls the generation of the attenuation force, the hydraulic circuit (90, 90', 110) includes the attenuation means (102a, 106a, 117a) in an oil passage (102, 106, 117) through which working oil flows when the vehicle body is rocked, and the attenuation means (102a, 106a, 117a) is capable of changing an attenuation force generated by the rocking damper (38) corresponding to a vehicle speed.

The invention described in claim 3 is characterized in that the rocking vehicle (1) includes an anti-lock brake system, and the rocking damper (38) increases an attenuation force at the time of falling of the vehicle body when the anti-lock brake system performs a brake pressure reducing operation.

The invention described in claim 4 is characterized in that the rocking vehicle (1) includes: a detection means which detects a lateral rocking angle of the vehicle body; and an electronically controlled automatic transmission, wherein the automatic transmission inhibits an automatic transmission when a detection value of the detection means is predetermined value or more.

According to the invention described in claim 1, when the vehicle body falls, an attenuation force is increased so that the falling of the vehicle body is made gentle. On the other hand, when the vehicle body is raised, an attenuation force is decreased so that the vehicle body can be raised smoothly. That is, a rider can surely have a light rolling feeling while maintaining the feeling of safety from rocking of the vehicle body.

According to the invention described in claim 2, an attenuation force which is generated when the vehicle body is rocked can be adjusted corresponding to any desired vehicle state so that the feeling of safety and a light rolling feeling of the vehicle body can be further enhanced.

According to the invention described in claim 3, the falling of the vehicle body at the time of operating an ABS can be properly suppressed.

According to the invention described in claim 5, an unintended transmission when the vehicle body is rocked is inhibited and hence, the influence exerted on the rocking of the vehicle body in the lateral direction due to the automatic transmission can be avoided.

Fig. 1 is a left side view of a saddle-ride-type vehicle according to an embodiment of the invention.
Fig. 2 is a front view of the above-mentioned saddle-ride-type vehicle.
Fig. 3 is a left side view of a front two-wheel suspension device of the above-mentioned saddle-ride-type vehicle.
Fig. 4 is a left side view of an upper portion of the above-mentioned front two-wheel suspension device.
Fig. 5 is a cross-sectional view of the front two-wheel suspension device at the center of a vehicle body in the lateral direction in Fig. 4.
Fig. 6 is a perspective view of a tie rod for steering front wheels and the surrounding of the tie rod of the above-mentioned saddle-ride-type vehicle.
Fig. 7(a) to (c) are top plan views of the above-mentioned front two-wheel suspension device along a king pin axis, wherein Fig. 7(a) shows the front two-wheel suspension device at the time of forward steering, Fig. 7(b) shows the front two-wheel suspension device at the time of leftward steering, and Fig. 7(c) shows the front two-wheel suspension device at the time of rightward steering.
Fig. 8(a) to Fig. 8(c) are front views of the above-mentioned front two-wheel suspension device along a vertical rocking axis, wherein Fig. 8(a) shows the front two-wheel suspension device when the vehicle body stands upright, Fig. 8(b) shows the front two-wheel suspension device when the vehicle body is rocked leftward, and Fig. 8(c) shows the front two-wheel suspension device when the vehicle body is rocked rightward.
Fig. 9(a) to Fig. 9(c) are front views of the above-mentioned front two-wheel suspension device along a vertical rocking axis, wherein Fig. 9(a) shows the front two-wheel suspension device when the vehicle body stands upright, Fig. 9(b) shows the front two-wheel suspension device when the vehicle body is rocked leftward, and Fig. 9(c) shows the front two-wheel suspension device when the vehicle body is rocked rightward.
Fig. 10 is a constitutional view of a first embodiment of a hydraulic circuit of a rocking damper of the above-mentioned saddle-ride-type vehicle.
Fig. 11 is a constitutional view of the above-mentioned hydraulic circuit in a state where the vehicle body is rocked leftward corresponding to the constitutional view in Fig. 10.
Fig. 12 is a constitutional view of the above-mentioned hydraulic circuit in a state where the vehicle body is rocked rightward corresponding to the constitutional view in Fig. 10.
Fig. 13 is a graph showing the relationship between a value of an electric current supplied to a control valve and a falling attenuation valve of the above-mentioned hydraulic circuit and a vehicle speed.
Fig. 14 is a waveform diagram showing a change in magnitude of an attenuation force which the above-mentioned rocking damper generates with respect to a rocking angle of the vehicle body in the lateral direction.
Fig. 15 is a flowchart showing an automatic transmission inhibition control corresponding to a rocking angle of the vehicle body.
Fig. 16 is a flowchart showing an attenuation force control corresponding to an ABS operation.
Fig. 17 is a constitutional view of a hydraulic circuit according to a second configuration corresponding to Fig. 10.
Fig. 18 is a constitutional view of a hydraulic circuit according to a third configuration corresponding to Fig. 10.

Hereinafter, embodiments of the invention are explained by reference to drawings. In the explanation made hereinafter, the frontward and rearward direction, the leftward and rightward directions and the like are equal to the respective directions of a vehicle explained hereinafter unless otherwise specified. In the drawings used for the explanation made hereinafter, an arrow FR which indicates a front side of the vehicle, an arrow LH which indicates a left side of the vehicle, and an arrow UP which indicates an upper side of the vehicle are shown in place.

### <Overall constitution of vehicle>

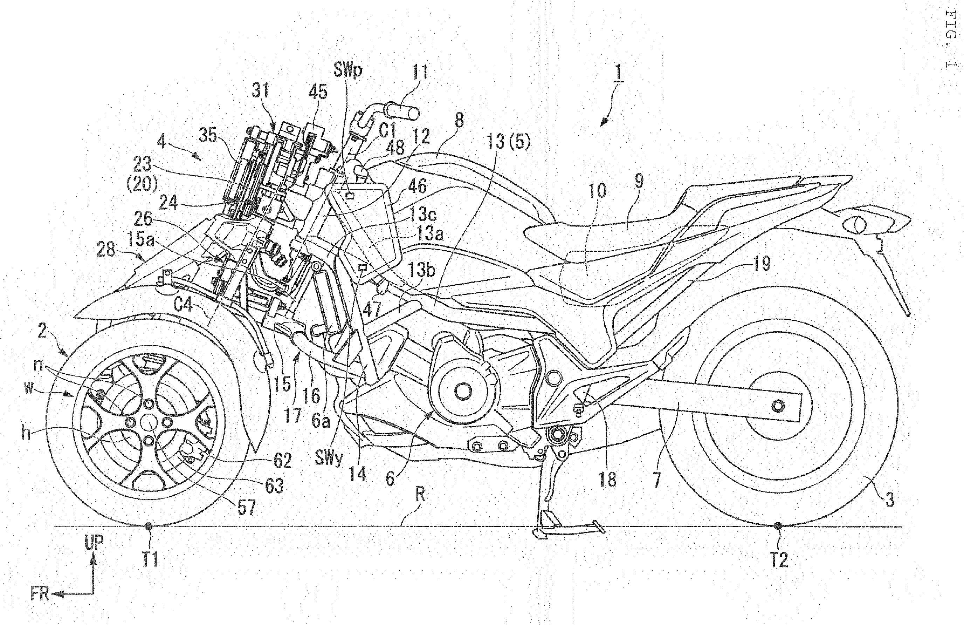

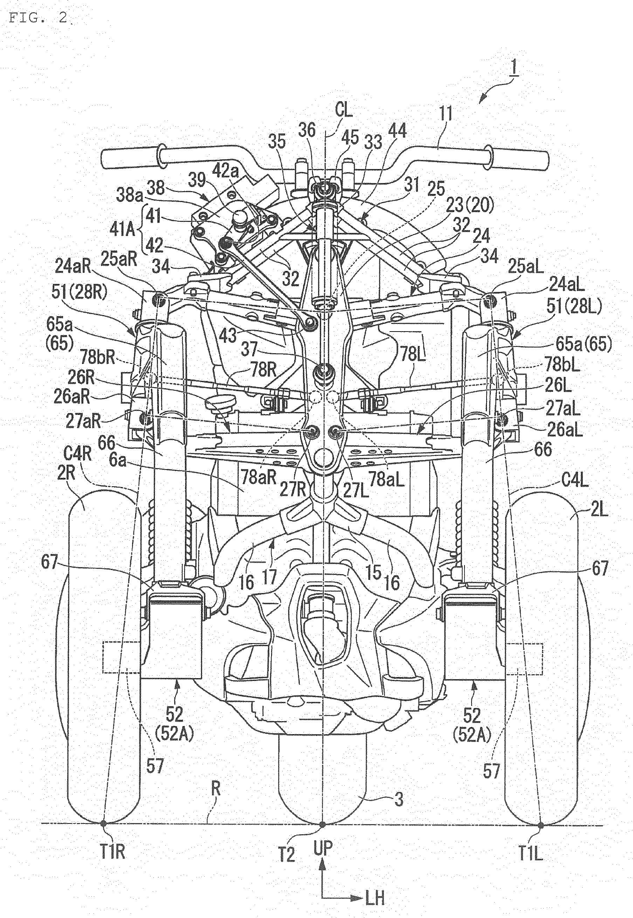

A saddle-ride-type vehicle 1 shown in Fig. 1 and Fig. 2 is constituted as a front two-wheel-type rocking vehicle which enables the rocking (rolling movement) of a vehicle body in the lateral direction, wherein the saddle-ride-type vehicle 1 includes a pair of left and right front wheels (steerable wheels) 2L, 2R on a front portion of a vehicle body in left and right symmetry, and a single rear wheel (drive wheel) 3 at the center of a rear portion of the vehicle body in the lateral direction. The saddle-ride-type vehicle 1 has the left and right symmetrical constitution unless otherwise specified. Also in the explanation made hereinafter, unless otherwise specified, the explanation is made with respect to the constitution of the saddle-ride-type vehicle 1 in a state where the left and right front wheels 2L, 2R are in contact with a horizontal road surface R, the saddle-ride-type vehicle 1 is in a 1G state where a load corresponding to a vehicle weight is applied to a front two-wheel suspension device 4 described later, the vehicle body is in an upright state where a rocking angle of the vehicle body in the lateral direction is set to 0 degrees, and the left and right front wheels 2L, 2R are in a forward steering state where a steering angle of the left and right front wheels 2L, 2R is set to 0°. In this configuration, to differentiate constitutional parts which are arranged in left and right symmetry from each other, symbol "L" is added to left constitutional parts, and a symbol "R" is added to right constitutional parts. However, these parts may be indicated by symbols excluding symbols "L" and "R".

A vehicle body frame 5 of the saddle-ride-type vehicle 1 includes: a head pipe 12 which supports a bar-type steering handle 11 at the center in the lateral direction of an upper side of a front portion of the vehicle body; left and right main frames 13 which extend rearward in the oblique rearward and downward direction while being branched in the leftward and rightward directions from a lower portion of the head pipe 12; left and right gusset frames 13a which extend rearward and downward with an inclination steeper than that of the main frames 13 while being branched in the leftward and rightward directions from an upper portion of the head pipe 12 and are joined to intermediate portions of the left and right main frames 13; left and right down frames 14 which extend rearward and downward with an inclination steeper than that of the main frames 13 from front end portions of the left and right main frames 13 in the vicinity of the head pipe 12; left and right gusset pipes 13b which extend between intermediate portions of the left and right main frames 13 and intermediate portions of the left and right down frames 14; left and right lower arm frames 16 which are bent inward in the lateral direction while extending frontward in the oblique frontward and upward direction from lower portions of the left and right down frames 14; a lower arm bracket 15 which is supported on front end portions of the left and right lower arm frames 16 below the head pipe 12; a connection pipe 15a which extends upward from the lower arm bracket 15 and is connected to a gusset 13c on a lower side of front end portions of the left and right main frames 13; and a front suspension frame body 20 which is supported on frame front end portions including the head pipe 12 and the lower arm bracket 15 and supports the front two-wheel suspension device 4 in front of these front end portions.

The lower arm bracket 15 and the left and right lower arm frames 16 constitute a branched lower frame 17 which extends frontward from the left and right down frames 14. Left and right pivot frames 18 extend downward from rear end portions of the left and right main frames 13. Left and right seat frames 19 extend rearward in the oblique rearward and upward direction from upper portions of the left and right pivot frames 18.

An engine (internal combustion engine) 6 which is a prime mover of the saddle-ride-type vehicle 1 is mounted below the main frames 13. A radiator 6a is arranged in front of the engine 6. The rear wheel 3 which is driven by power of the engine 6 is supported on a rear end portion of a swing arm 7. A front end portion of the swing arm 7 is supported on the left and right pivot frames 18 in a vertically swingable manner. A storage box 8 is arranged above the engine 6, a seat 9 on which a rider is seated is arranged behind the storage box 8, and a fuel tank 10 is arranged below the seat 9.

Here, a transmission (not shown in the drawing) which is contiguously mounted on the engine 6 is an electronically controlled automatic transmission which performs an automatic transmission corresponding to a vehicle state such as a vehicle speed.

A center axis (steering axis) C1 of the head pipe 12 is arranged on a center line CL of the vehicle body in the lateral direction as viewed in a front view of the vehicle. The axis C1 is inclined such that the axis C1 is positioned at a more rear side as the axis C1 extends upward in the vertical direction as viewed in a side view of the vehicle.

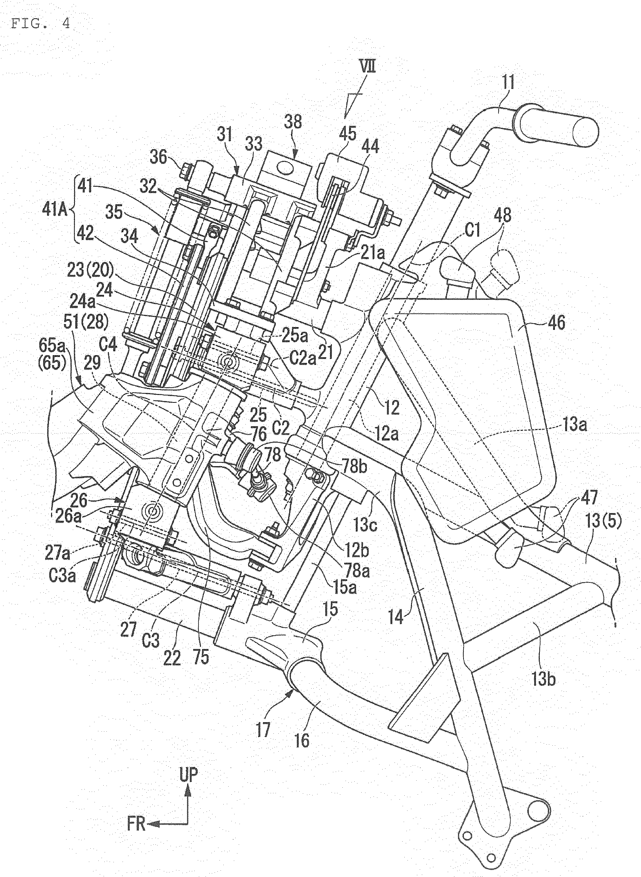

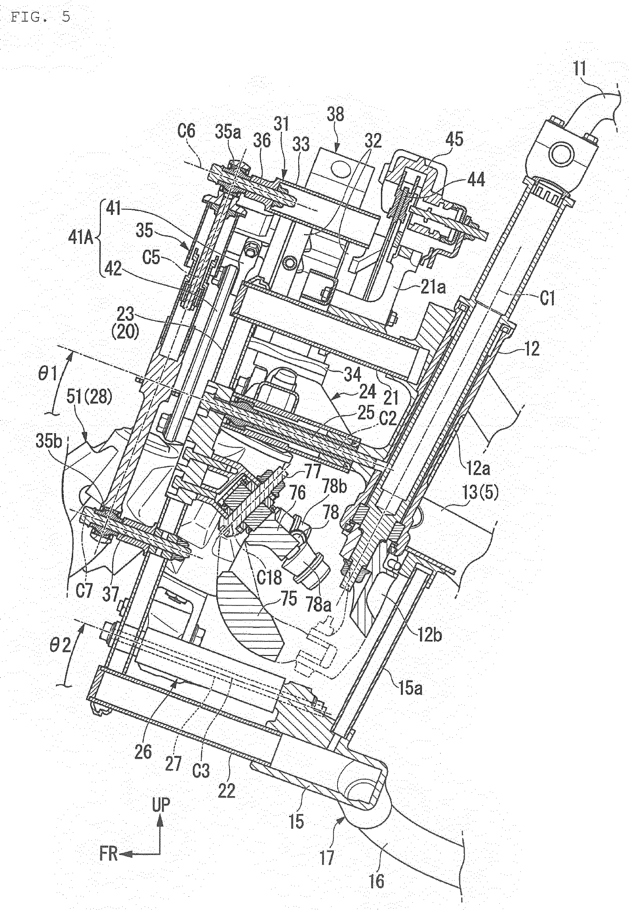

By reference to Fig. 4 and Fig. 5, a steering shaft 12a is coaxially and rotatably inserted into and supported on the head pipe 12. The bar-type steering handle 11 is mounted on an upper end portion of the steering shaft 12a which projects upward from the head pipe 12. A bottom bracket 12b to which a steering link 75 is connected is mounted on a lower end portion of the steering shat 12a which projects downward from the head pipe 12.

The front suspension frame body 20 includes: an upper support frame 21 which extends frontward in the oblique frontward and upward direction from an intermediate portion of the head pipe 12 in the vertical direction; a lower support frame 22 which extends frontward in the oblique frontward and upward direction from a front end portion of the lower arm bracket 15; and a front sub frame 23 which extends in the vertical direction between front end portions of the upper and lower support frames 21, 22 in an inclined manner such that the front sub frame 23 is positioned at a more rear side as the front sub frame 23 extends upward.

The upper and lower support frames 21, 22 are arranged parallel to each other, and are arranged such that an inclination angle of the upper and lower support frames 21, 22 with respect to the horizontal direction is set smaller than an inclination angle of the upper and lower support frames 21, 22 with respect to the direction orthogonal to the axis C1 of the head pipe 12 as viewed in a side view of the vehicle.

The front sub frame 23 has a plate shape and having a large thickness in the axial direction of the upper and lower support frames 21, 22, and is arranged such that an inclination angle of the front sub frame 23 with respect to the vertical direction is set smaller than an inclination angle of the front sub frame 23 with respect to the head pipe 12 as viewed in a side view of the vehicle.

A front end portion of an upper rocking shaft 25 which penetrates a laterally center portion of an upper arm 24 which is integrally formed with the front two-wheel suspension device 4 is supported on an upper portion of the front sub frame 23. Front end portions of left and right lower rocking shafts 27L, 27R which penetrate laterally inner end portions of left and right lower arms 26L, 26R which are provided as left and right separate bodies in the front two-wheel suspension device 4 are supported on a lower portion of the front sub frame 23. The upper and lower rocking shafts 25, 27 are arranged parallel to each other, and are also arranged parallel to the upper and lower support frames 21, 22.

In the drawing, symbol C2 indicates a center axis of the upper rocking shaft 25, and symbols C3L, C3R indicate center axes of the left and right lower rocking shafts 27L, 27R respectively. To explain the configuration also by reference to Fig. 2, as viewed in a front view of the vehicle body, the center axis C2 of the upper rocking shaft 25 is arranged on the center line CL of the vehicle body in the lateral direction, and the center axes C3L, C3R of the left and right lower rocking shafts 27L, 27R are arranged offset leftward and rightward from the center line CL of the vehicle body in the lateral direction respectively.

By reference to Fig. 2 and Fig. 4, the upper arm 24 and the left and right lower arms 26L, 26R of the front two-wheel suspension device 4 extend in the leftward direction and the rightward direction in front of the head pipe 12. Upper portions of left and right front fork units 28L, 28R which suspend the left and right front wheels 2L, 2R independently are steerably supported on the upper arm 24 and laterally outer end portions of the left and right lower arms 26L, 26R by way of left and right steering shafts (king pin shafts) 29L, 29R which are arranged parallel to the head pipe 12 and offset frontward from the head pipe 12 as viewed in a side view of the vehicle. In the drawing, symbols C4L, C4R indicate center axes (king pin axes) of the left and right steering shafts 29L, 29R.

The front two-wheel suspension device 4 makes the vehicle body including the vehicle body frame 5, the engine 6, the rear wheel 3 and the like rock in the lateral direction while maintaining a state where the left and right front wheels 2L, 2R are in contact with the ground, and the left and right front fork units 28L, 28R and the left and right front wheels 2L, 2R are rocked in the lateral direction in response to rocking of the vehicle body in the lateral direction. On the other hand, the front two-wheel suspension device 4 makes the left and right front fork units 28L, 28R and the left and right front wheels 2L, 2R move in the vertical direction with respect to the vehicle body alternately.

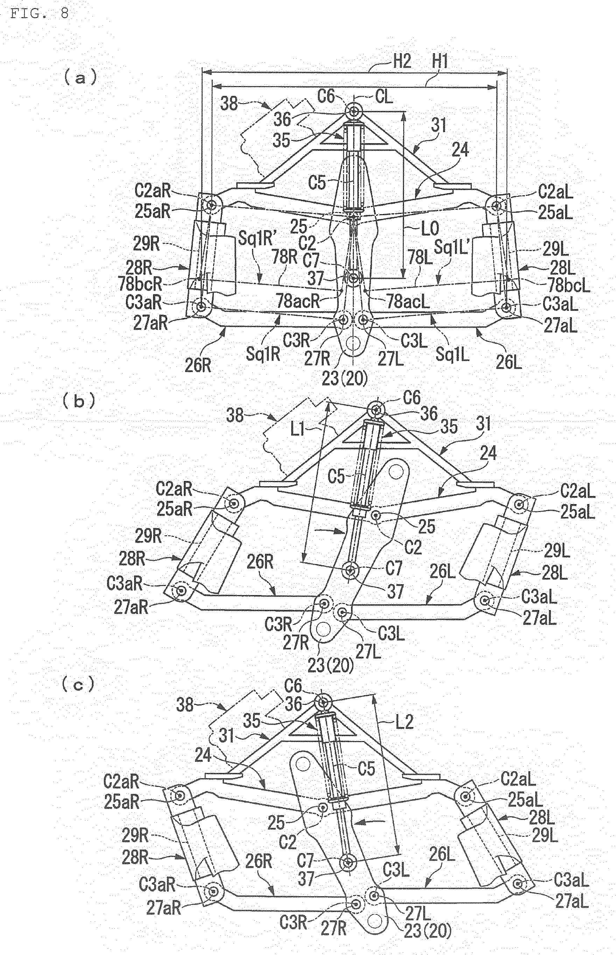

As shown in Fig. 8(a), as viewed in the axial direction of the upper and lower rocking shafts 25, 27, left and right arm portions of the upper arm 24, the left and right lower arms 26L, 26R and upper portions of the left and right front fork units 28L, 28R are arranged in a parallel link shape in the lateral direction of the vehicle body including the front sub frame 23.

That is, quadrangular shapes sq1L, sq1R which are formed by connecting, in the lateral direction of the vehicle body, the axis C2 of the upper rocking shaft 25, the axes C3L, C3R of the left and right lower rocking shafts 27L, 27R, axes C2aL, C2aR of left and right upper outer support shafts 25aL, 25aR described layer of laterally outer end portions of the upper arm 24, and axes C3aL, C3aR of left and right lower outer support shafts 27aL, 27aR described later of laterally outer end portions of the left and right lower arms 26L, 26R form an approximately parallelogram respectively. Due to such a constitution, when the upper arm 24 and the left and right lower arms 26L, 26R are rocked, the left and right front fork units 28L, 28R and the left and right front wheels 2L, 2R move in the vertical direction in an approximately translational manner.

As viewed in the axial direction of the upper and lower rocking shafts 25, 27, the left and right arm portions of the upper arm 24, left and right tie rods 78L, 78R, and the upper portions of the left and right front fork units 28L, 28R are arranged in a parallel link shape in the lateral direction of the vehicle body including the front sub frame 23.

That is, quadrangular shapes sq1L', sq1R' which are formed by connecting, in the lateral direction of the vehicle body, the axis C2 of the upper rocking shaft 25, the axes C2aL, C2aR of the left and right upper outer support shafts 25aL, 25aR of the upper arm 24, and the centers of rocking 78acL, 78bcL, 78acR, 78bcR arranged inside and outside the left and right tie rods 78L, 78R form an approximately parallelogram respectively. Due to such a constitution, when the upper arm 24 and the left and right lower arms 26L, 26R are rocked, also the left and right tie rods 78L, 78R move in the vertical direction substantially parallel to each other thus suppressing the influence exerted on a steering angle of the left and right front wheels 2L, 2R.

To explain this configuration also by reference to Fig. 2 and Fig. 4, left and right upper outer brackets 24aL, 24aR are respectively rockably supported on the laterally outer end portions of the upper arm 24 by way of the upper outer support shafts 25aL, 25aR arranged parallel to the upper and lower rocking shafts 25, 27. Upper end portions of the left and right steering shafts 29L, 29R are respectively supported on the left and right upper outer brackets 24aL, 24aR. The center axes C2aL, C2aR of the upper outer support shafts 25aL, 25aR are positioned more inside in the lateral direction of the vehicle body than ground contact points T1L, T1R of the left and right front wheels 2L, 2R. In the drawing, symbol T2 indicates a ground contact point of the rear wheel 3.

Left and right lower outer brackets 26aL, 26aR are respectively rockably supported on laterally outer end portions of the left and right lower arms 26L, 26R by way of the lower outer support shafts 27aL, 27aR arranged parallel to the upper and lower rocking shafts 25, 27. Lower end portions of the left and right steering shafts 29L, 29R are respectively supported on the left and right lower outer brackets 26aL, 26aR. The center axes C3aL, C3aR of the lower outer support shafts 27aL, 27aR are positioned more outside in the lateral direction than the center axes C2aL, C2aR of the upper outer support shafts 25aL, 25aR and more inside in the lateral direction than the ground contact points T1L, T1R of the left and right front wheels 2L, 2R. Accordingly, a distance H2 between the laterally outer end portions of the left and right lower arms 26L, 26R becomes longer than a distance H1 between the laterally outer end portions of the upper arm 24.

A damper frame body 31 is fixed onto the upper arm 24 in such a manner that the damper frame body 31 straddles the upper arm 24 in the lateral direction. The damper frame body 31 has an upwardly projecting V shape as viewed in a front view of the vehicle. The damper frame body 31 includes: two pairs of left and right frames pipes 32 which extend along left and right inclined sides and are arranged parallel to each other in the longitudinal direction; a top bracket 33 which connects laterally inner end portions of the left and right frame pipes 32 to each other; and left and right fixed plates 34 which are fixedly mounted on laterally outer ends of the left and right frame pipes 32. The left and right fixing plates 34 are fixed onto the laterally outer end portions of the upper arm 24 by fastening.

To explain this configuration also by reference to Fig. 5, an upper end portion of the cylinder-type spring device (rocking reaction force generator) 35 is rockably connected to a front end portion of the top bracket 33 by way of an upper connecting shaft 36 arranged parallel to the upper and lower rocking shafts 25, 27 and a spherical bearing 35a.

The spring device 35 is constituted by combining a rod-type stroke guide and a coil spring, and a center axis (stroke axis) C5 of the spring device 35 is arranged on the center line CL in the lateral direction of the vehicle body as viewed in a front view of the vehicle when the vehicle body is in an upright state. A lower end portion of the spring device 35 is rockably connected to the front sub frame 23 at a position below the upper rocking shaft 25 and above the lower rocking shaft 27 by way of a lower connecting shaft 37 arranged parallel to upper and lower rocking shafts 25, 27 and a spherical bearing 35b. In the drawing, symbols C6, C7 indicate center axes of the upper and lower connecting shafts 36, 37 respectively.

As shown in Fig. 8(a), the spring device 35 assumes a most extended state where the spring device 35 extends in the vertical direction at the center of the vehicle body in the lateral direction when the vehicle body is in an upright state. The full length between the axes C6, C7 in the spring device 35 at this point of time is set to L0.

On the other hand, as shown in Fig. 8(b) and Fig. 8(c), when the vehicle body is rocked in the lateral direction from the upright state, the spring device 35 strokes such that an extended length of the spring device 35 is shortened from the most extended state. That is, the full lengths L1, L2 of the spring device 35 in Fig. 8(b) and Fig. 8(c) become shorter than the full length L0 shown in Fig. 8(a). A force which makes the spring device 35 extend at this point of time becomes a restoring force which intends to return the vehicle body to an upright state, and this force also becomes a reaction force against the rolling movement of the vehicle body.

The spring device 35 is arranged at the center in the lateral direction of the vehicle body when the vehicle body is in an upright state and hence, an amount of extension and contraction of the spring device 35 with respect to the rolling movement of the vehicle body becomes equal between the case where the vehicle body is rocked leftward and the case where the vehicle body is rocked rightward. Accordingly, it is possible to acquire the same restoring force in both the case where the vehicle body is rocked leftward and the case where the vehicle body is rocked rightward.

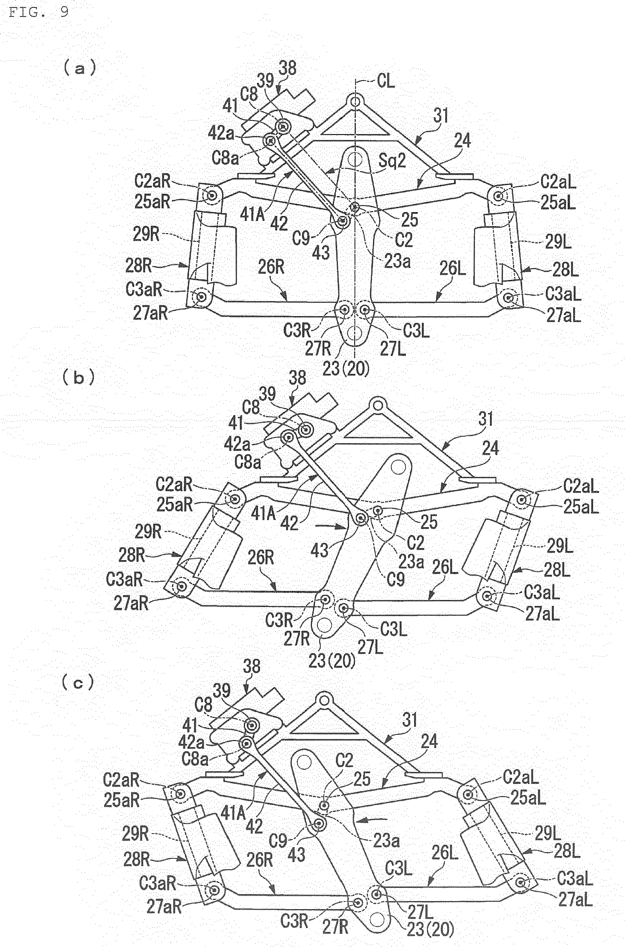

As shown in Fig. 2 and Fig. 9, a rotary-type rocking damper (rocking attenuation device) 38 for attenuating rocking energy of the vehicle body is supported on the right frame pipe 32 of the damper frame body 31, for example.

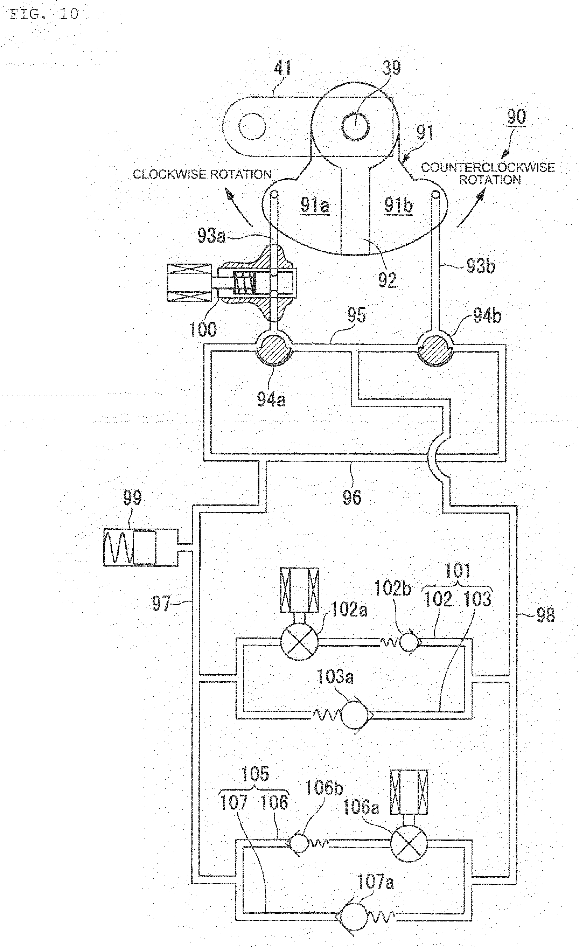

To explain this configuration also by reference to Fig. 10, in the rocking damper 38, a sector-shaped oil chamber 91 is defined in the inside of a housing 38a having a rectangular parallelepiped shape, and an attenuation force can be acquired by rocking a vane 92 in the inside of the oil chamber 91. A magnitude of an attenuation force of the rocking damper 38 is controlled by a control device which includes a hydraulic circuit 90 as a main component. The hydraulic circuit 90 is described in detail later.

A damper rocking shaft 39 which is rocked integrally with the vane 92 projects frontward from a front surface of the housing 38a in a state where the housing 38a is mounted on the vehicle body. A proximal end portion of a rocking lever 41 is mounted on the projecting portion of the damper rocking shaft 39 in an integrally rockable manner.

An upper end portion of a link rod 42 is rockably connected to a distal end portion of the rocking lever 41 by way of a link connecting shaft 42a. A lower end portion of the link rod 42 is rockably connected to the front sub frame 23 at a position on a right side of and below the upper rocking shaft 25 by way of a damper connecting shaft 43. That is, the damper rocking shaft 39 is connected to the vehicle body frame 5 by way of a link mechanism 41A including the rocking lever 41 and the link rod 42.

The damper rocking shaft 39, the link connecting shaft 42a and the damper connecting shaft 43 are shafts arranged parallel to the upper and lower rocking shafts 25, 27. In the drawing, symbol C8 indicates a center axis of the damper rocking shaft 39, symbol C8a indicates a center axis of the link connecting shaft 42a, and symbol C9 indicates a center axis of the damper connecting shaft 43.

As shown in Fig. 9(a), the link mechanism 41A is arranged in a parallel link shape including an offset portion 23a of the front sub frame 23 which extends between the upper rocking shaft 25 supporting the upper arm 24 and the damper connecting shaft 43 to which the link rod 42 is connected.

That is, a quadrangular shape sq2 formed by connecting the axis C2 of the upper rocking shaft 25, the axis C8 of the damper rocking shaft 39, the axis C8a of the link connecting shaft 42a, and the axis C9 of the damper connecting shaft 43 substantially forms a parallelogram.

Due to such a constitution, as shown in Fig. 9(b) and Fig. 9(c), if the upper arm 24 and the front sub frame 23 are rocked by a predetermined angle relative to each other when the vehicle body or the like is rocked, the vane 92 disposed in the inside of the housing 38a is rocked by the substantially same angle thus allowing the rocking damper 38 to generate a predetermined attenuation force. The rocking damper 38 and the link mechanism 41A are set such that the rocking damper 38 and the link mechanism 41A generate the same attenuation force in both the case where the vehicle body is rocked leftward and the case where the vehicle body is rocked rightward.

The rocking damper 38 is formed of an electronically-controlled-type variable damper which changes a magnitude of an attenuation force which the rocking damper 38 generates corresponding to a vehicle speed of the saddle-ride-type vehicle 1. The hydraulic circuit 90 of the rocking damper 38 changes over an oil passage by operating a solenoid valve or the like based on vehicle speed information acquired by wheel speed sensors (vehicle speed sensor) 2S mounted on the left and right front wheels 2L, 2R, for example. Due to such an operation, the rocking damper 38 changes a magnitude of an attenuation force or the like in an appropriate manner during a period ranging from a time that the saddle-ride-type vehicle 1 is in a stopped state to a time that the saddle-ride-type vehicle travels at a high speed.

By reference to Fig. 2 and Fig. 4, a lock plate 44 which extends in an arcuate shape as viewed in a front view of the vehicle along a rocking trajectory of the upper arm 24 with respect to the vehicle body frame 5 is fixed to a rear portion of the damper frame body 31. The lock plate 44 has a plate shape extending orthogonal to the axial direction of the upper and lower rocking shafts 25, 27, and a lock caliper 45 which can clamp the lock plate 44 in the thickness direction of the lock plate 44 is arranged at an upper end position of the lock plate 44. The lock caliper 45 is supported on a support bracket 21a which is fixedly mounted on the upper support frame 21.

The lock caliper 45 is of a cable type. One end of a manipulation cable not shown in the drawing which extends from a manipulation box 46 arranged on a left side of the front portion of the vehicle body as shown in Fig. 1 is connected to the rock caliper 45. The other end of the manipulation cable is connected to a working end of a rocking lock lever 47 formed on a lower portion of the manipulation box 46. When the rocking lock lever 47 is operated, the lock caliper 45 is operated so that the lock plate 44 is clamped whereby it is possible to lock the rocking of the vehicle body in the leftward and rightward directions. The manipulation box 46 includes a parking brake lever 48 on an upper portion thereof, and a manipulation cable not shown in the drawing which extends from a working end of the parking brake lever 48 is connected to a parking brake not shown in the drawing which is arranged in the vicinity of the rear wheel 3, for example. In the inside of the manipulation box 46, a parking switch SWp which detects an operation state of the parking brake lever 48 and a rocking lock switch SWy which detects an operation state of the rocking lock lever 47 are arranged.

Upper portions of the left and right front fork units 28L, 28R are steerably supported between the left and right upper outer brackets 24aL, 24aR which are supported on the upper arm 24 and the left and right lower outer brackets 26aL, 26aR which are supported on the left and right lower arms 26L, 26R by way of the left and right steering shafts 29L, 29R.

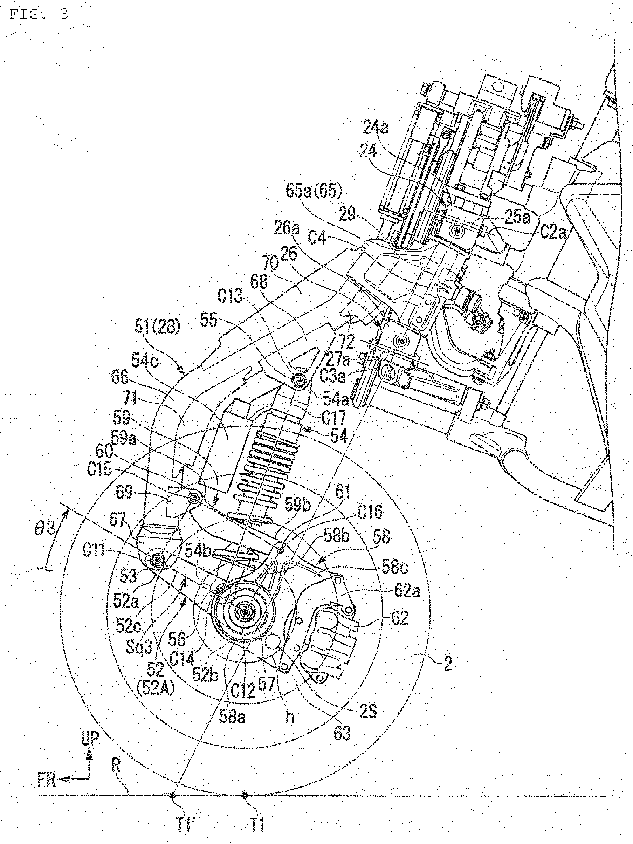

Fig. 3 shows the left front fork unit 28L which is in a state where the left front wheel 2L, a hub h and the like are removed. The right front fork unit 28R has the constitution symmetrical with the constitution of the left front fork unit 28L in the lateral direction. Hereinafter, the left and right front fork units 28L, 28R are explained by reference to Fig. 2 and Fig. 3.

The left and right front fork units 28L, 28R constitute a trailing-link-type front suspension 52A respectively such that the trailing-link-type front suspension 52A is arranged adjacent to laterally inner sides of the left and right front wheels 2L, 2R. Each of the left and right front fork units 28L, 28R includes: a fork body 51 which has an upper portion thereof supported on the upper arm 24 and a laterally outer end portion of the left or right lower arm 26L, 26R; a trailing arm 52 which has a front end portion 52a thereof rockably supported on a lower end portion of the fork body 51; a cushion unit 54 which extends between a rear portion of the trailing arm 52 and an upper portion of the fork body 51; a front wheel axle 57 which is mounted on a rear end portion 52b of the trailing arm 52 in an integrally rockable manner; a caliper bracket 58 which supports a brake caliper 62 by way of a support bracket 62a behind the front wheel axle 57 and is rockably supported on the front wheel axle 57; and a torque rod 59 which has a rear end portion 59b thereof rockably connected to the caliper bracket 58 above the front wheel axle 57 and has a front end portion 59a thereof rockably connected to a lower portion of the fork body 51.

A front rocking shaft 53 of the trailing arm 52 and front and rear rocking shafts 60, 61 of the torque rod 59 are arranged parallel to the front wheel axle 57. In the drawing, symbol C11 indicates a center axis of the front rocking shaft 53, symbol C15, C16 indicate center axes of the front and rear rocking shafts 60, 61 respectively, and symbol C12 indicates a center axis of the front wheel axle 57 along the lateral direction.

The fork body 51 has: an upper bracket 65 which is supported between the upper arm 24 and laterally outer end portions of the left and right lower arms 26L, 26R by way of the left and right steering shafts 29L, 29R; and a fork pipe 66 which has an upper portion thereof made to pass through and fixed to a pipe insertion portion 65a of the upper bracket 65 which projects frontward from the steering shaft 29.

The upper portion of the fork pipe 66 is made to pass through the pipe insertion portion 65a while having an angle which the upper portion makes with the vertical direction larger than an angle which the upper portion makes with the steering shaft 29 as viewed in a side view of the vehicle. The fork pipe 66 and the pipe insertion portion 65a are arranged laterally inside the inner ends of the left and right front wheels 2L, 2R.

The fork pipe 66 is bent and extends frontward and downward below the pipe insertion portion 65a and, thereafter, is bent and extends downward at a position in front of the front wheel axle 57. A pivot bracket 67 which supports the front end portion 52a of the trailing arm 52 is fixedly mounted on a lower end portion of the fork pipe 66. The pivot bracket 67 is arranged above and in front of the front wheel axle 57 as viewed in a side view of the vehicle.

An upper cushion bracket 68 which supports an upper end portion 54a of the cushion unit 54 is fixedly mounted on a rear lower side of an intermediate portion of the fork pipe 66. A front rod bracket 69 which supports the front end portion 59a of the torque rod 59 is fixedly mounted on a rear side of a lower portion of the fork pipe 66. An upper front gusset 70 is fixedly mounted on a front upper side of the intermediate portion of the fork pipe 66, a lower rear gusset 71 is fixedly mounted on a rear inner peripheral side of the downwardly bending portion of the fork pipe, and an upper rear gusset 72 is fixedly mounted on a rear side of an upper portion of the fork pipe 66.

The trailing arm 52 is arranged such that the trailing arm 52 extends downward and rearward from the pivot bracket 67. The front wheel axle 57 projects laterally outward from the rear end portion 52b of the trailing arm 52. The hub h of the front wheel 2 is rotatably and non-detachably mounted on the front wheel axle 57. On the laterally outside of the hub h, a center portion of a wheel w of the front wheel 2 is fastened by a plurality of wheel nuts n. A brake disc 63 which is clamped by the brake caliper 62 is mounted on an outer periphery of the hub h.

The cushion unit 54 has a rod-type damper which is inclined such that the rod-type damper is positioned on a more rear side as the rod-type damper extends upward as viewed in a side view of the vehicle, and a coil spring which is wound around the periphery of the damper. The upper end portion 54a of the cushion unit 54 is supported on the upper cushion bracket 68 by way of an upper support shaft 55. A lower end portion 54b of the cushion unit 54 is supported on a portion of the trailing arm 52 close to the front wheel axle 57 by way of a lower support shaft 56. The upper and lower support shafts 55, 56 are shafts arranged parallel to the front wheel axle 57. In the drawing, symbols C13, C14 indicate center axes of the upper and lower support shafts 55, 56, and symbol C17 indicates a center axis (stroke axis) of the cushion unit 54 respectively.

A sub tank 54c which is communicably connected to the damper is arranged on a front side of an upper portion of the cushion unit 54. The sub tank 54c has a cylindrical shape extending parallel to the axis C17, and is arranged in a space defined between a cushion body including the damper and the coil spring and the fork body 51.

The cushion unit 54 performs the stroke movement along the axis C17 due to the rocking of the trailing arm 52 generated by the vertical movement of the front wheel 2 thus absorbing an impact or the like inputted to the front wheel 2 and attenuating the vertical movement of the front wheel 2.

The caliper bracket 58 includes: a base portion 58a which is fitted on the front wheel axle 57 in a relatively rotatable manner; an upper arm portion 58b which extends rearward and upward from the base portion 58a; and a support plate portion 58c which extends rearward from the base portion 58a and the upper arm portion 58b. The rear end portion 59b of the torque rod 59 which passes through the laterally outside of the cushion unit 54 is connected to an upper end portion of the upper arm portion 58b by way of a rear rocking shaft 61.

The brake caliper 62 is arranged so as to clamp a rear lower portion of the brake disc 63 which is rotated integrally with the front wheel 2 in the axle direction. The brake caliper 62 applies braking to the rotation of the front wheel 2 by clamping the brake disc 63 by an oil pressure supplied from a master cylinder not shown in the drawing. The brake disc 63, the brake caliper 62 and the caliper bracket 58 are arranged inside a bowl-shaped wheel w which opens inward in the lateral direction of the front wheel 2.

A front wheel brake which is mainly constituted of the brake disc 63 and the brake caliper 62 is provided to the left and right front wheels 2L, 2R respectively. A rear wheel brake having the substantially same constitution as the front wheel brake is provided to the single rear wheel 3. The supply of an oil pressure to the front wheel brake is mainly performed by operating a brake lever arranged on a right grip of the steering handle 11, for example. Due to such an operation, braking is simultaneously applied to the left and right front wheels 2L, 2R. The supply of an oil pressure to the rear wheel brake is mainly performed by operating a brake pedal arranged on a right step, for example. The front and rear wheel brakes may be operated individually in response to independent operation inputting respectively, or may be operated in an interlocking manner in response to operation inputting to at least one of the front and rear wheel brakes.

Here, the saddle-ride-type vehicle 1 includes an anti-lock brake system (hereinafter referred to as ABS). An oil pressure generated by operating the brake lever and the brake pedal is supplied to the front and rear wheel brakes by way of an ABS module (not shown in the drawing). When slipping (locking) of the front wheel or the rear wheel is detected at the time of braking the front or rear wheels, the ABS module performs a control of reducing an oil pressure supplied to a corresponding caliper for avoiding such slipping (locking).

By connecting the upper end portion of the upper arm portion 58b of the caliper bracket 58 to the lower portion of the fork body 51, the torque rod 59 inputs a braking reaction force inputted to the caliper bracket 58 from the brake caliper 62 at the time of braking the front wheel to the fork body 51 which constitutes a suspension frame. At the time of braking the front wheel, the trailing arm 52 is rocked due to the braking reaction force so that the cushion unit 54 is allowed to perform a stroke operation. However, by inputting the braking reaction force to the fork body 51 by way of the torque rod 59, pitching attributed to rocking of the trailing arm 52 at the time of braking the front wheel can be suppressed.

The lower portion of the fork body 51, the trailing arm 52, the caliper bracket 58 and the torque rod 59 are arranged in a parallel link shape as viewed in a side view of the vehicle.

That is, a quadrangular shape sq3 which is formed by connecting the axis C11 of the front rocking shaft 53, the axis C12 of the front wheel axle 57, and the axes C15, C16 of the front and rear rocking shafts 60, 61 to each other as viewed in a side view of the vehicle substantially forms a parallelogram.

The king pin axes C4L, C4R of the left and right steering shafts 29L, 29R are inclined with respect to the vertical direction as viewed in a side view of the vehicle such that the king pin axes C4L, C4R are positioned on a more rear side as the king pin axes C4L, C4R extend upward. In other words, the left and right king pin axes C4L, C4R are inclined so as to be parallel to the steering axis C1. The left and right king pin axes C4L, C4R are inclined with respect to the vertical direction as viewed in a front view of the vehicle such that the king pin axes C4L, C4R are positioned more inside in the lateral direction as the king pin axes C4L, C4R extend upward.

Downwardly extended portions of the left and right king pin axes C4L, C4R as viewed in a front view of the vehicle reach the ground contact points (the center of ground contact) T1L, T1R of the left and right front wheels 2L, 2R.

An intersecting point T1' between the downwardly extended portion of the king pin axis C4 and the road surface R as viewed in a side view of the vehicle is positioned in front of the ground contact point T1 of the front wheel 2 and generates a trail. An inclination angle of the king pin axis C4 with respect to the vertical direction as viewed in a side view of the vehicle becomes a caster angle. The front wheel axle 57 is offset frontward from the king pin axis C4 as viewed in a side view of the vehicle.

Respective tires of the left and right front wheels 2L, 2R and the rear wheel 3 have a tread surface having an arcuate cross section. The left and right front wheels 2L, 2R are inclined in the same manner as the vehicle body by the action of the front two-wheel suspension device 4 at the time of banking (rolling) of the vehicle body, and a ground contact point of the tread surface is moved to a side from the center. At this point of time, a steering angle is generated on the left and right front wheels 2L, 2R in the direction that the left and right front wheels 2L, 2R are inclined by the action of the trail.

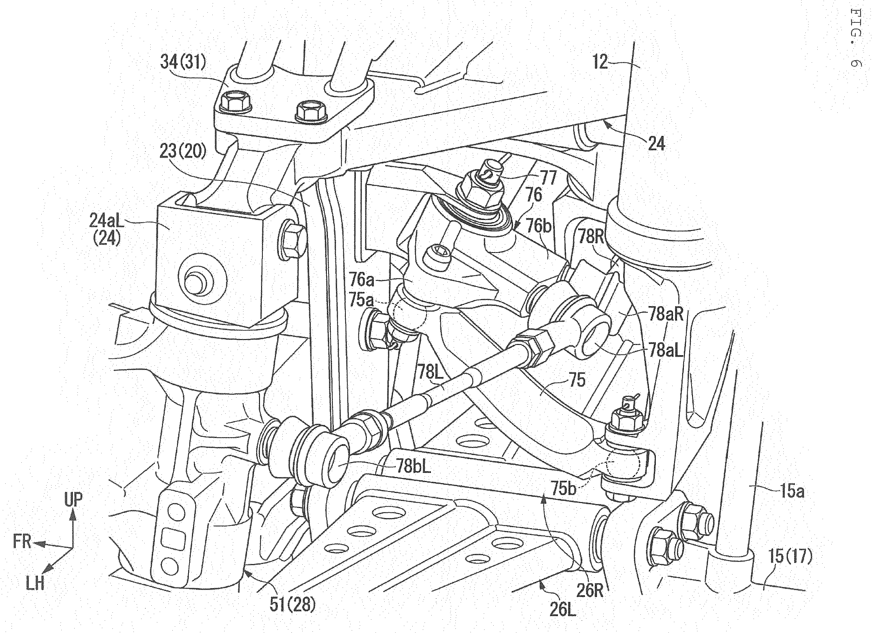

By reference to Fig. 4 to Fig. 6, a rear end portion of the steering link 75 is connected to the bottom bracket 12b which is mounted on a lower end portion of the steering shaft 12a by way of a spherical bearing 75b. A front end portion of the steering link 75 is connected to a first arm 76a of a bell crank member 76 which is supported on a rear surface side of the front sub frame 23 by way of a spherical bearing 75a.

The bell crank member 76 is rockably supported on a rear-surface-side center portion of the front sub frame 23 in the lateral direction of the vehicle body by way of a relay shaft 77 having the larger inclination with respect to the vertical direction than that of the steering shaft 29 as viewed in a side view of the vehicle.

Laterally inner ends of the left and right tie rods 78L, 78R are connected to a second arm 76b of the bell crank member 76 by way of left and right spherical bearings 78aL, 78aR. Laterally outer ends of the left and right tie rod 78L, 78R are connected to rear portions of the upper brackets 65 of the left and right fork bodies 51 by way of left and right spherical bearings 78bL, 78bR respectively (see Fig. 2).

Due to such a constitution, the steering handle 11 and the left and right front wheels 2L, 2R are interlocked with each other. Accordingly, when the steering handle 11 is steered leftward and rightward, the left and right front fork units 28L, 28R and the left and right front wheels 2L, 2R are steered in either in the leftward direction or in the rightward direction by way of the steering shaft 12a, the steering link 75, the bell crank member 76 and the left and right tie rods 78L, 78R.

The bell crank member 76 is arranged so as to overlap with upper portions of the left and right front fork units 28L, 28R as viewed in a side view of the vehicle. The left and right front fork units 28L, 28R and the left and right front wheels 2L, 2R are steered by way of the left and right tie rods 78L, 78R which extend from the bell crank member 76 substantially along the lateral direction.

In the case where the left and right tie rods which are largely inclined with respect to the lateral direction are extended and connected to the left and right front fork units 28L, 28R which are offset frontward from the head pipe 12 from the steering shaft 12a which is supported on the head pipe 12, it is difficult to make steering angles of the left and right front wheels 2L, 2R equal to each other compared to the case where the left and right tie rods are extended and connected to the left and right front fork units 28L, 28R along the lateral direction.

That is, according to this configuration, the rotation of the steering shaft 12a is converted into the rotation of the bell crank member 76 which is offset frontward from the head pipe 12 and, thereafter, the left and right tie rods 78L, 78R are extended from the bell crank member 76 and are connected to the left and right front fork units 28L, 28R. Accordingly, the steering angles of the left and right front wheels 2L, 2R can be easily set equal to each other. The bell crank member 76 can be efficiently arranged between the left and right front fork units 28L, 28R.

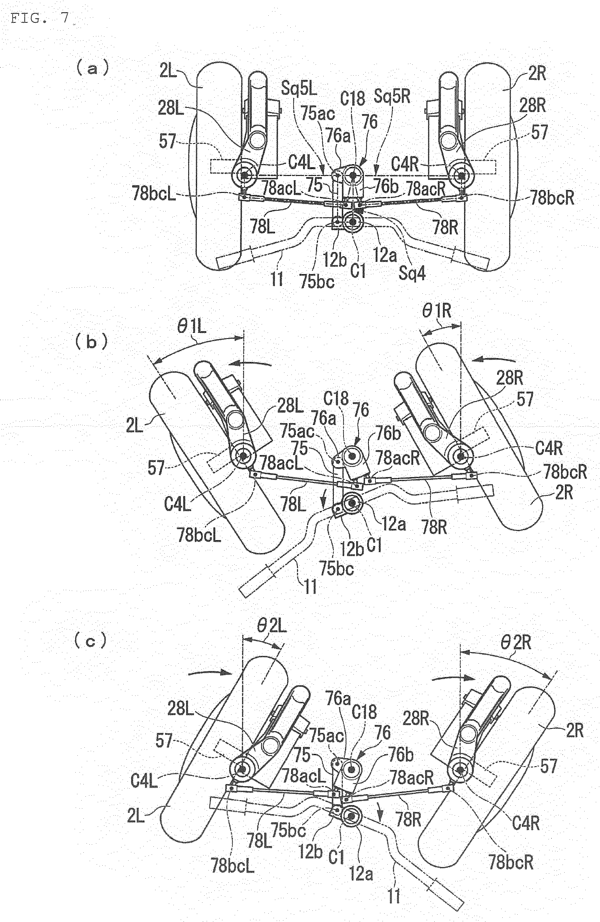

Fig. 7 is a view as viewed in the direction indicated by an arrow VII in Fig. 4 (a view as viewed in the direction indicated by an arrow along the inclination of the king pin axis C4 as viewed in a side view of the vehicle).

As shown in FIG. 7(a), the bottom bracket 12b mounted on the lower end portion of the steering shaft 12a, the steering link 75 which is connected to the bottom bracket 12b, and the first arm 76a of the bell crank member 76 are arranged in a parallel link shape.

That is, a quadrangular shape sq4 which is formed by connecting the steering axis C1, an axis C18 of the relay shaft 77 (indicated by a dotted line for the sake of convenience of illustration), and rocking centers 75ac, 75bc of the spherical bearings 75a, 75b arranged on front and rear sides of the steering link 75 substantially forms a parallelogram. Due to such a constitution, a rotation angle of the steering handle 11 and a rotation angle of the bell crank member 76 become substantially equal to each other (see Fig. 7(b) and Fig. 7(c)).

In Fig. 7(a), the second arm 76b of the bell crank member 76, the left and right tie rods 78L, 78R, and upper portions of the left and right front fork units 28L, 28R form a pair of left and right laterally-elongated four-joint links where a width on a rear side is narrower than a width on a front side.

That is, in left and right quadrangular shapes sq5L, sq5R which are respectively formed by connecting the axis C18 of the relay shaft 77, the rocking centers 78acL, 78bcL, 78acR, 78bcR of the inner and outer spherical bearings 78aL, 78bL, 78aR, 78bR of the left and right tie rods 78L, 78R, and the left and right king pin axes C4L, C4R on left and right side of the vehicle body respectively, distances between the axis C18 and the left and right king pin axes C4L, C4R are set larger than distances between the inner and outer rocking centers 78acL, 78bcL, 78acR, 78bcR of the left and right tie rods 78L, 78R.

Further, straight lines which connect the axis C18 and the inner rocking centers 78acL, 78acR of the left and right tie rods 78L, 78R respectively are arranged in an inclined manner such that these straight lines are positioned more outside in the lateral direction as the straight lines extend rearward, and straight lines which connect the left and right king pin axes C4L, C4R and the outer rocking centers 78bcL, 78bcR of the left and right tie rods 78L, 78R are arranged along the longitudinal direction of the vehicle. Further, the former straight lines are set longer than the latter straight lines.

The above-mentioned left and right four-joint links can exhibit the substantially same action as the so-called Ackerman mechanism. When the left and right front wheels 2L, 2R are steered, out of the left and right front wheels 2L, 2R, a steering angle of the inner-side front wheel can be set larger than a steering angle of the outer-side front wheel. That is, when the left and right front wheels 2L, 2R are steered leftward as shown in Fig. 7(b), a steering angle θ1L of the left front wheel 2L is larger than a steering angle θ1R of the right front wheel 2R. On the other hand, when the left and right front wheels 2L, 2R are steered rightward as shown in Fig. 7(c), a steering angle θ2R of the right front wheel 2R is larger than a steering angle θ2L of the left front wheel 2L.

As shown in Fig. 5, an inclination angle θ1 of the upper rocking shaft 25 with respect to the horizontal plane (corresponding to a road surface R) and an inclination angle θ2 of the lower rocking shaft 27 with respect to the horizontal plane are equal to each other as viewed in a side view, and these angles are set to 20° in this configuration.

Leftward rocking and rightward rocking of the vehicle body are made about an axis which extends frontward and upward parallel to the upper and lower rocking shafts 25, 27. Accordingly, in an attempt to rock the vehicle body leftward or rightward while maintaining a state where the left and right front wheels 2L, 2R are in contact with the ground, the left and right front wheels 2L, 2R intend to move also in the longitudinal direction alternately along with the vertical movement with respect to the vehicle body. Accordingly, by stopping the left and right front wheels 2L, 2R by applying braking to the left and right front wheels 2L, 2R, even when a rider intends to rock the vehicle body leftward and rightward, the rocking of the vehicle body is restricted.

In the front fork unit 28 which is in a 1G state shown in Fig. 3, assuming a straight line which connects the axes C11, C12 on front and rear ends of the trailing arm 52 as viewed in a side view of the vehicle as an arm length reference line 52c, an inclination angle θ3 of the arm length reference line 52c with respect to the horizontal plane (corresponding to the road surface R) as viewed in a side view is set to 20°, that is, the same angle as the inclination angles of the upper and lower rocking shafts 25, 27 in this configuration.

Further, when the trailing arm 52 is rocked by stroking the cushion unit 54 from the 1G state, the front wheels 2 intend to move also in the longitudinal direction along with the vertical movement. Accordingly, by stopping the left and right front wheels 2L, 2R by applying braking to the left and right front wheels 2L, 2R, the leftward and rightward rocking of the vehicle body due to individual stroking of the left and right cushion units 54 is restricted.

The inclination angles θ1, θ2 of the upper and lower rocking shafts 25, 27 are not limited to 20°. By setting these inclination angles θ1, θ2 to an angle exceeding 20°, an amount of movement of the left and right front wheels 2L, 2R in the longitudinal direction is increased and hence, an advantageous effect of restricting the rocking of the vehicle body obtained by applying braking to the left and right front wheels 2L, 2R can be enhanced. In the same manner, an inclination angle θ3 of the trailing arm 52 is not also limited to 20°. By setting the inclination angle θ3 to an angle exceeding 20°, an advantageous effect of restricting the rocking of the vehicle body is enhanced in the same manner as described previously.

### <First embodiment of hydraulic circuit of rocking damper>

As shown in Fig. 10, in the rocking damper 38, the hydraulic circuit 90 which includes a sector-shaped oil chamber 91 is formed in the inside of the housing 38a having a rectangular parallelepiped shape.

Fig. 10 is an explanatory view showing the constitution of the hydraulic circuit 90 together with the damper rocking shaft 39, the rocking lever 41, the vane 92 and the oil chamber 91 as viewed in the same direction as Fig. 9.

The sector-shaped oil chamber 91 is divided into two oil chambers by the vane 92 which is integrally rocked with the damper rocking shaft 39. Hereinafter, the oil chamber defined on a left side of the vane 92 in the drawing is referred to as a counterclockwise rotation oil chamber 91a, and the oil chamber defined on a right side of the vane 92 in the drawing is referred to as a clockwise rotation oil chamber 91b.

The hydraulic circuit 90 includes: a first oil passage 93a and a second oil passage 93b each having a proximal end thereof connected to both end portions of the sector-shaped oil chamber 91 in the circumferential direction respectively; a first rotary valve 94a and a second rotary valve 94b to which distal ends of the respective oil passages are connected respectively and which are formed of a three-way valve respectively; a first communication oil passage 95 which extends between one port out of two ports which are opened and closed by the rotary valve 94a and one port out of two ports which are opened and closed by the rotary valve 94b; a second communication oil passage 96 which extends between the other port which is opened and closed by the rotary valve 94a and the other port which is opened and closed by the rotary valve 94b; a falling upstream oil passage 97 which has a proximal end thereof connected to the first communication passage 95; a raising upstream oil passage 98 which has a proximal end thereof connected to the second communication passage 96; and a falling attenuation circuit 101 and a raising attenuation circuit 105 which extend between distal end sides of the falling upstream oil passage 97 and the raising upstream oil passage 98.

Each rotary valve 94a, 94b is conjured such that a valve element is rotatably disposed in the inside of a cylindrical body.

The first oil passage 93a, the first communication oil passage 95 and the second communication oil passage 96 are connected to the first rotary valve 94a. The first oil passage 93a and either one of the first communication oil passage 95 and the second communication oil passage 96 are selectively communicated with each other due to the rotation of the valve element.

The second oil passage 93b, the first communication oil passage 95 and the second communication oil passage 96 are connected to the second rotary valve 94b. The second oil passage 93b and either one of the first communication oil passage 95 and the second communication oil passage 96 are selectively communicated with each other due to the rotation of the valve element.

In the falling attenuation circuit 101, a falling attenuation oil passage 102 having a falling attenuation valve 102a which constitutes a solenoid valve and a check valve 102b, and a relief oil passage 103 having a relief valve 103a are arranged parallel to each other. The falling attenuation valve 102a is a control valve which generates an attenuation force (resistance force) with respect to the rocking generated when the vehicle body falls either in the leftward direction or in the rightward direction by throttling a flow passage or the like, and makes such an attenuation force variable. The check valve 102b and the relief valve 103a are formed of a check valve which allows the flow of working oil from the falling upstream oil passage 97 to the raising upstream oil passage 98 while not allowing the flow of working oil in the reverse direction.

In the raising attenuation circuit 105, a raising attenuation oil passage 106 having a raising attenuation valve 106a which constitutes a solenoid valve and a check valve 106b, and a relief oil passage 107 having a relief valve 107a are arranged parallel to each other. The raising attenuation valve 106a is a control valve which generates an attenuation force (resistance force) with respect to the rocking generated when the vehicle body which falls either in the leftward direction or in the rightward direction by throttling a flow passage or the like is raised, and makes such an attenuation force variable. The check valve 106b and the relief valve 107a are formed of a check valve which allows the flow of working oil from the raising upstream oil passage 98 to the falling upstream oil passage 97 while not allowing the flow of working oil in the reverse direction.

In the drawing, symbol 99 indicates an accumulator which is connected to the raising upstream oil passage 98, for example, and the accumulator 99 absorbs a change in capacitance of working oil in the hydraulic chamber 90 due to the expansion or shrinkage of working oil.

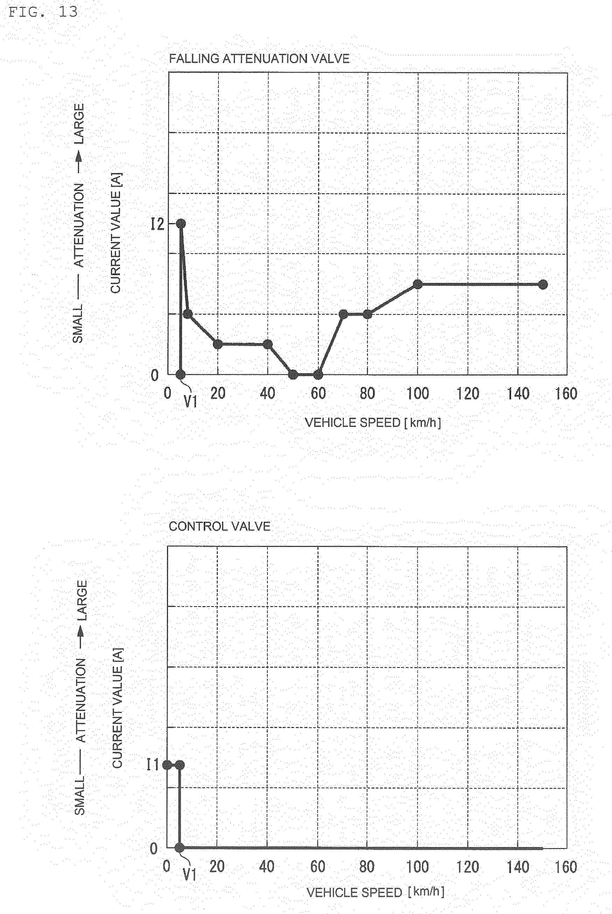

A control valve 100 which allows and interrupts the flow of working oil is interposed in one of the first oil passage 93a and the second oil passage 93b (in the drawing, first oil passage 93a). The control valve 100 is a normally-open-type solenoid valve (spool valve). The control valve 100 is configured not to allow the flow of working oil into the first oil passage 93 by stroking the valve element against a biasing force of an installed spring when a solenoid is energized, and is also configured to allow the flow of working oil into the first oil passage 93a by stroking the valve element by the biasing force of the spring when the energization of the solenoid is stopped. To explain this operation by reference to Fig. 13, electricity 11 supplied to the normally-open-type control valve 100 is set lower than electricity 12 which the falling attenuation valve 102a uses at a vehicle speed V1 (for example, 5km/h) or below.

When the control valve 100 is closed, an attenuation force generated by the rocking damper 38 becomes the maximum.

### <Manner of operation of first embodiment>

Next, the manner of operation of the first embodiment is explained.

During a period where the rocking lock switch SWy detects that the rocking lock is made (the vehicle being in a stopped state), the energization of the control valve 100 is not performed.

When the rocking lock is released, the energization of the normally-open-type control valve 100 in the first oil passage 93a is performed so that the flow of working oil into the first oil passage 93a is shut off.

When the vehicle body of the rocking vehicle intends to rock either in the leftward direction or in the rightward direction in such a state, the rocking lever 41 and the damper rocking shaft 39 are also rotated in the same direction so that the vane 92 in the oil chamber 91 is rocked. With respect to the flow of working oil between the counterclockwise rotation oil chamber 91a and the clockwise rotation oil chamber 91b which are partitioned from each other by the vane 92, all flow passages through the hydraulic circuit 90 include the first oil passage 93a as described previously. Accordingly, in a state where the flow of working oil into the first oil passage 93a is shut off, the flow of working oil between the counterclockwise rotation oil chamber 91a and the clockwise rotation oil chamber 91b is wholly performed through a gap formed between the vane 92 and an inner wall of the oil chamber. At this stage of the operation, an attenuation force of the rocking damper 38 becomes the maximum and acts as a resistance force against the rocking of the vehicle body.

When a vehicle speed is shifted to a low-vehicle-speed range from a vehicle stop range (for example, 5km/h or below), the energization of the control valve 100 in the first oil passage 93a is stopped so that the first oil passage 93a is opened thus allowing the flow of working oil into the first oil passage 93a. At this shift timing, the energization mode is switched to the energization of the falling attenuation valve 102a.

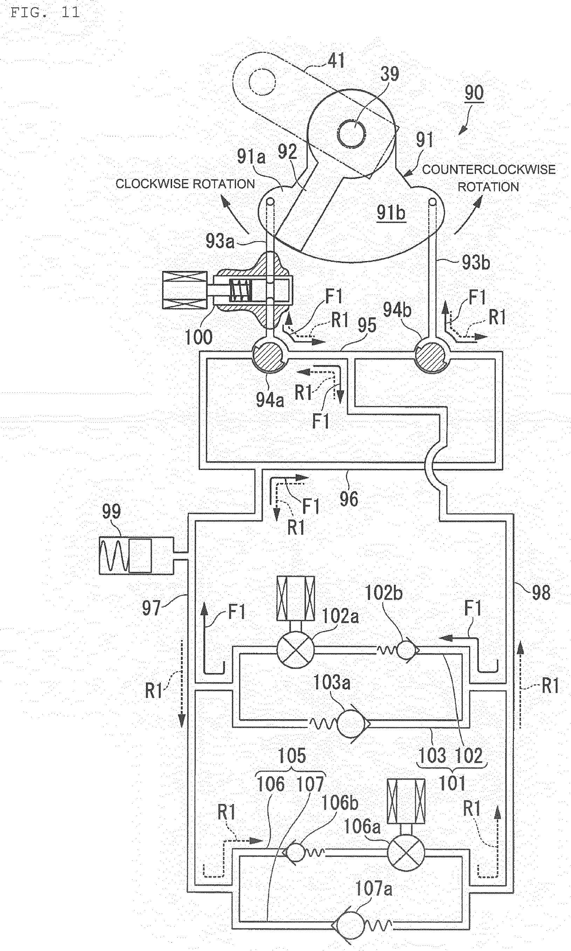

When the vehicle body of the rocking vehicle falls leftward in such a state (see Fig. 9(b)), as shown in Fig. 11, the rocking lever 41 and the damper rocking shaft 39 are rotated in the counterclockwise direction (in the clockwise direction in the drawing) so that the counterclockwise rotation oil chamber 91a becomes small due to the rocking of the vane 92. Accordingly, as indicated by an arrow F1 in the drawing, working oil in the counterclockwise rotation oil chamber 91a reaches the first rotary valve 94a from the first oil passage 93a, and reaches the second rotary valve 94b after passing through the plurality of oil passages and, thereafter, returns to the inside of the clockwise rotation oil chamber 91b from the second oil passage 93b.

In the above-mentioned constitution, in the first rotary valve 94a, the valve element which is operated interlockingly with the damper rocking shaft 39 is rotated in the same direction as the damper rocking shaft 39 and hence, the communication between the first oil passage 93a and the second communication oil passage 96 is shut off and, at the same time, the first oil passage 93a and the first communication oil passage 95 are communicated with each other. Here, in the second rotary valve 94b, the communication between the second oil passage 93b and the first communication oil passage 95 is shut off due to the rotation of a valve element which is operated interlockingly with the damper rocking shaft 39 in the same manner and hence, all working oil which reaches the first communication oil passage 95 from the first oil passage 93a flows into the falling upstream oil passage 97.

Out of two attenuation circuits connected to the falling upstream oil passage 97, the raising attenuation circuit 105 inhibits the flow of working oil into the raising upstream oil passage 98 from the falling upstream oil passage 97 using two check valves and hence, all working oil from the falling upstream oil passage 97 flows through the falling attenuation circuit 101 and reaches the raising upstream oil passage 98.

The falling attenuation oil passage 102 in the falling attenuation circuit 101 allows working oil to flow through the check valve 102b and the falling attenuation valve 102a. Here, by operating the falling attenuation valve 102a, the flow resistance which working oil receives can be changed so that an attenuation force generated by the rocking damper 38 can be changed.

Working oil which reaches the raising upstream oil passage 98 through the falling attenuation circuit 101 returns to the clockwise rotation oil chamber 91b from the second communication oil passage 96 through the second rotary valve 94b and the second oil passage 93b.

The falling attenuation valve 102a increases or decreases an attenuation force generated by the rocking damper 38 within a range where the attenuation force does not exceed an attenuation force generated when the control valve 100 closes the first oil passage 93a.

When the falling attenuation oil passage 102 is closed for some reasons, working oil opens the relief valve 103a of the relief oil passage 103 and flows into the raising upstream oil passage 98 from the falling upstream oil passage 97.

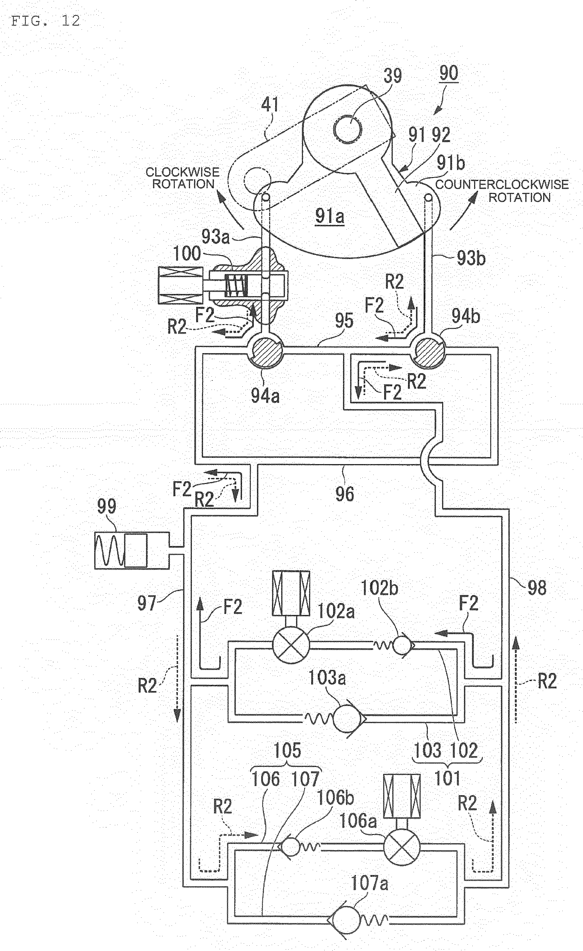

On the other hand, when the vehicle body falls rightward when a vehicle speed falls within a middle-vehicle-speed range of the rocking vehicle (see Fig. 9(c)), as shown in Fig. 12, the rocking lever 41 and the damper rocking shaft 39 are rotated in the clockwise direction (in the counterclockwise direction in the drawing) so that the clockwise rotation oil chamber 91b becomes small due to the rocking of the vane 92. Accordingly, as indicated by an arrow F2 in the drawing, working oil in the clockwise rotation oil chamber 91b reaches the second rotary valve 94b from the second oil passage 93b, and reaches the first rotary valve 94a after passing through the plurality of oil passages and, thereafter, returns to the inside of the counterclockwise rotation oil chamber 91a from the first oil passage 93a.

In the above-mentioned constitution, in the second rotary valve 94b, a valve element which is operated interlockingly with the damper rocking shaft 39 is rotated in the same direction as the damper rocking shaft 39 and hence, the communication between the second oil passage 93b and the second communication oil passage 96 is shut off and, at the same time, the second oil passage 93b and the first communication oil passage 95 are communicated with each other. Here, in the first rotary valve 94a, the communication between the first oil passage 93a and the first communication oil passage 95 is shut off due to the rotation of a valve element which is operated interlockingly with the damper rocking shaft 39 in the same manner and hence, all working oil which reaches the first communication oil passage 95 from the second oil passage 93b flows through the falling upstream oil passage 97.

In succeeding steps, in the same manner as described previously, all working oil which flows through the falling upstream oil passage 97 flows through the falling attenuation circuit 101 and reaches the raising upstream oil passage 98, and generates an attenuation force at this point of time. Working oil which reaches the raising upstream oil passage 98 returns to the counterclockwise rotation oil chamber 91a from the second communication oil passage 96 through the first rotary valve 94a and the first oil passage 93a.

By reference to Fig. 11, when the vehicle body of the rocking vehicle intends to raise rightward from a leftwardly falling state, the rocking lever 41 and the damper rocking shaft 39 are rotated in the clockwise direction (in the counterclockwise direction in the drawing) and hence, the clockwise rotation oil chamber 91b becomes small due to the rocking of the vane 92. Accordingly, as indicated by an arrow R1 in the drawing, working oil in the clockwise rotation oil chamber 91b reaches the second rotary valve 94b from the second oil passage 93b, and reaches the first rotary valve 94a after passing through the plurality of oil passages and, thereafter, returns to the counterclockwise rotation oil chamber 91a from the first oil passage 93a.

In the above-mentioned constitution, during a period where the vehicle body is in a leftwardly falling state, the second rotary valve 94b shuts off the communication between the second oil passage 93b and the first communication oil passage 95, the second oil passage 93b and the second communication oil passage 96 are communicated with each other, and the first rotary valve 94a shuts off the communication between the first oil passage 93a and the second communication oil passage 96. Accordingly, all working oil which reaches the second communication oil passage 96 through the second rotary valve 94b from the second oil passage 93b flows through the raising upstream oil passage 98.

Out of two attenuation circuits connected to the raising upstream oil passage 98, the falling attenuation circuit 101 inhibits the flow of working oil into the falling upstream oil passage 97 from the raising upstream oil passage 98 using two check valves and hence, all working oil from the raising upstream oil passage 98 flows through the raising attenuation circuit 105 and reaches the falling upstream oil passage 97.

The raising attenuation oil passage 106 of the raising attenuation circuit 105 allows working oil to flow through the check valve 106b and the raising attenuation valve 106a. Here, by operating the raising attenuation valve 106a, the flow resistance which working oil receives can be changed so that an attenuation force generated by the rocking damper 38 can be changed.

Working oil which reaches the falling upstream oil passage 97 through the raising attenuation circuit 105 returns to the counterclockwise rotation oil chamber 91a through the first communication oil passage 95, the first rotary valve 94a and the first oil passage 93a.

An attenuation force generated by operating the raising attenuation valve 106a is set sufficiently smaller than an attenuation force generated by operating the falling attenuation valve 102a.

When the raising attenuation oil passage 106 is closed for some reasons, working oil opens the relief valve 107a of the relief oil passage 107 and flows into the falling upstream oil passage 97 from the raising upstream oil passage 98.

On the other hand, by reference to Fig. 12, when the vehicle body of the rocking vehicle intends to raise leftward from a rightwardly falling state, the rocking lever 41 and the damper rocking shaft 39 are rotated in the counterclockwise direction (in the clockwise direction in the drawing) so that the counterclockwise rotation oil chamber 91a becomes small due to the rocking of the vane 92. Accordingly, as indicated by an arrow R2 in the drawing, working oil in the counterclockwise rotation oil chamber 91a reaches the first rotary valve 94a from the first oil passage 93a, and reaches the second rotary valve 94b after passing through the plurality of oil passages and, thereafter, returns to the clockwise rotation oil chamber 91b from the second oil passage 93b.

In the above-mentioned constitution, during a period where the vehicle body is in a rightwardly falling state, the first rotary valve 94a shuts off the communication between the first oil passage 93a and the first communication oil passage 95, and the first oil passage 93a and the second communication oil passage 96 are communicated with each other, and the second rotary valve 94b shuts off the communication between the second oil passage 93b and the second communication oil passage 96. Accordingly, all working oil which reaches the second communication oil passage 96 from the first oil passage 93a through the first rotary valve 94a flows into the raising upstream oil passage 98.

In succeeding steps, in the same manner as described previously, all working oil which flows through the raising upstream oil passage 98 flows through the raising attenuation circuit 105 and reaches the falling upstream oil passage 97, and generates an attenuation of this point of time. Working oil which reaches the falling upstream oil passage 97 returns to the clockwise rotation oil chamber 91b from the first communication oil passage 95 through the second rotary valve 94b and the second oil passage 93b.

### <Setting of attenuation force>

In the rocking damper 38, during a period where the rocking lock switch SWy is in an ON state, the energization of the control valve 100 and the respective attenuation valves 102a, 106a is stopped and hence, electricity to be supplied to the rocking damper 38 can be minimized.

In the rocking damper 38, only the control valve 100 is brought into an energized state in response to the turning off of the rocking lock switch SWy. In the case where a traveling state of the saddle-ride-type vehicle 1 is in a vehicle stop range (0 to 5km/h), the flow of working oil into the respective attenuation circuits is stopped by closing the control valve 100 thus suppressing the rocking of the vehicle body by maximally increasing a flow resistance which working oil receives, that is, an attenuation force. In this configuration, it is determined that the vehicle is in a stopped state until a vehicle speed exceeds 5km/h including an error or the like in detection by a vehicle speed sensor.

In the rocking damper 38, in the case where a vehicle speed of the saddle-ride-type vehicle 1 falls within a low-vehicle-speed range(5 to 30km/h), firstly, when a vehicle speed exceeds 5km/h, the control valve 100 is deenergized so that the control valve 100 is opened whereby working oil flows into the respective attenuation circuits. Particularly, a magnitude of an attenuation force when the vehicle body falls is controlled by operating the falling attenuation valve 102a.

In the rocking damper 38, in the case where a vehicle speed of the saddle-ride-type vehicle 1 falls within an intermediate-vehicle-speed range (30 to 70km/h), compared to the control in the low-vehicle-speed range, an attenuation force is minimized thus acquiring the lightest rolling feeling from the rocking of the vehicle body.

Still further, in the rocking damper 38, in the case a vehicle speed of the saddle-ride-type vehicle 1 falls within a high-vehicle-speed range (over 70km/h), compared to the control in the intermediate-vehicle-speed range, a flow resistance which working oil receives is increased along with the increase of the vehicle speed and, particularly, an attenuation force when the vehicle body falls is gradually increased thus suppressing an influence of disturbance exerted on the falling of the vehicle body.

The falling attenuation valve 102a increases or decreases a flow resistance which working oil receives, that is, an attenuation force substantially in proportion to an amount of electricity supplied to the falling attenuation valve 102a. That is, in the falling attenuation valve 102a, the larger an amount of electricity supplied to the falling attenuation valve 102a, the larger an attenuation force becomes, while the smaller an amount of electricity supplied to the falling attenuation valve 102a, the smaller an attenuation force becomes.

Fig. 13 are graphs showing the relationship between a current value for energizing the control valve 100 and the falling attenuation valve 102a and a vehicle speed. An upper stage of Fig. 13 shows an amount of electricity supplied to the falling attenuation valve 102a, and a lower stage of Fig. 13 shows an amount of electricity supplied to the control valve 100. These graphs show examples of the tendency of attenuation forces and hence, these graphs may also contain portions which differ from the tendency of an attenuation force of the above-mentioned rocking damper 38.

During a period where the rocking lock switch SWy is in an OFF state and a vehicle speed falls within a range from 0 to 5km/h, a relatively small amount of electricity I1 is supplied to the control valve 100, and the supply of electricity to the falling attenuation valve 102a is shut off so that an attenuation force becomes maximum thus contributing to a staggering control (self-standing control) of a vehicle body. Then, at timing that the vehicle speed exceeds 5km/h, the supply of electricity to the control valve 100 is shut off and the supply of electricity is switched to the falling attenuation valve 102a so that an attenuation force becomes the maximum. However, immediately after the attenuation force becomes the maximum, an amount of an electric current supplied to the falling attenuation valve 102a is rapidly lowered thus avoiding a constraint rolling feeling (leftward and rightward rocking). After the vehicle speed exceeds 5km/h, the state where the supply of electricity to the control valve 100 is shut off is continued.

Then, in the falling attenuation valve 102a, a current value is gradually and gently lowered until the vehicle speed becomes 20km/h, and during a period where the vehicle speed falls within a range from 20km/h to 40km/h, the current value is held at a predetermined low value (low attenuation force). Accordingly, an attenuation force for reducing staggering is added to an extent that a constraint rolling feeling is not imparted to a rider while enhancing steerability.

In the falling attenuation valve 102a, when a vehicle speed falls within a range from 40km/h to 50km/h, a current value is lowered corresponding to the increase of a vehicle speed. Further, when the vehicle speed falls within a range from 50km/h to 60km/h, a current value is set to a minimum value (0) so that an attenuation force in the vehicle speed range where the importance is placed on steerability can be minimized. Thereafter, when the vehicle speed falls within a range from 60km/h to 70km/h, a current value is increased corresponding to the increase of the vehicle speed. When the vehicle speed falls within a range from 70km/h to 80km/h, the current value is held at a value higher than a current value when the vehicle speed falls within a range from 20km/h to 40km/h. Further, when the vehicle speed falls within a range from 80km/h to 100km/h, the current value is gently increased corresponding to the increase of the vehicle speed.

When a vehicle speed falls within a range exceeding 100km/h, the current value is held at a value higher than the current value when the vehicle speed falls within a range from 70km/h to 80km/h thus contributing to the stability of rolling within the high-vehicle-speed range because of the addition of an attenuation force while maintaining predetermined steerability. A current value (and therefore an attenuation force) at this point of time is set to a value smaller than an intermediate value between the maximum value and the minimum value.

The above-mentioned control of an attenuation force is performed by controlling operations of the control valve 100, and the respective attenuation valves 102a, 106a using a damper ECU (electric control unit, the same definition being applicable hereinafter) which attached to a housing 38a of the rocking damper 38.

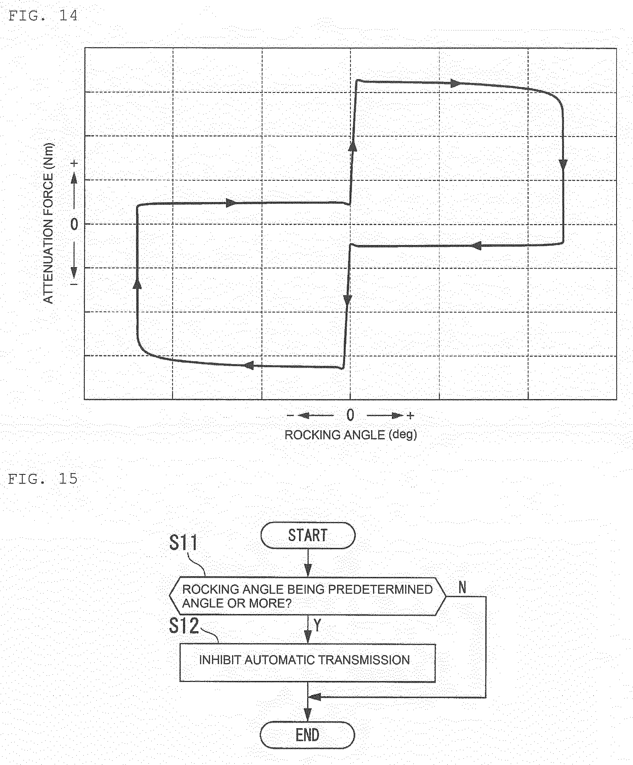

Fig. 14 is a waveform diagram showing a change in magnitude of an attenuation force generated by the rocking damper 38 with respect to a rocking angle of the vehicle body in the lateral direction.

When the vehicle body is rocked so as to fall either in the leftward direction or in the rightward direction from an upright state where a rocking angle of the vehicle body is 0°, the rocking damper 38 steeply generates an approximately maximum attenuation force against the falling immediately after the starting of the rocking, and maintains the attenuation force until the falling of the vehicle body is stopped.

When the vehicle body is raised thereafter, the rocking damper 38 cancels the attenuation force against the falling immediately after the starting of the rocking and, at the same time, generates a substantially minimum attenuation force against such raising of the vehicle body, and maintains such an attenuation force until a rocking angle of the vehicle body becomes approximately 0°.

In the saddle-ride-type vehicle 1, for example, a rocking angle sensor which electrically detects a rocking angle of the vehicle body in the lateral direction is mounted on the rocking damper 38. Based on a detection value detected by the rocking angle sensor, a control is performed such that an attenuation force of the rocking damper 38 is changed corresponding to a rocking angle of the vehicle body in the lateral direction.

In this control, a detection value of the rocking angle sensor is also used for an automatic transmission control of a transmission attached to an engine of the saddle-ride-type vehicle 1. To be more specific, to explain the control by reference to Fig. 15, when a vehicle speed falls within a middle-vehicle-speed range or more, the ECU which controls the operation of the transmission determines whether or not a rocking angle of the vehicle body is equal to or more than a predetermined angle (for example, 30°) based on a detection value detected by the rocking angle sensor, for example. When the determination result is affirmative, the ECU inhibits the automatic transmission control. It is preferable that the automatic transmission inhibition control is not performed in a low-vehicle speed range, and the automatic transmission inhibition control is performed from an intermediate-vehicle-speed range.

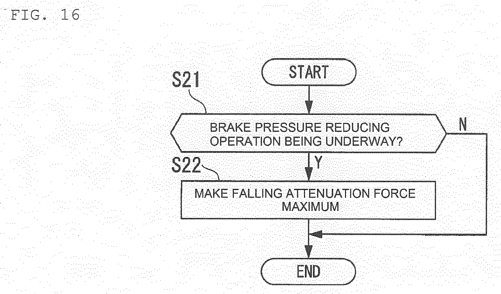

In the saddle-ride-type vehicle 1, when a brake pressure reducing operation is performed using an ABS, an attenuation force when the vehicle body falls is increased to a maximum value irrespective of a vehicle speed and a rocking angle, for example. To be more specific, to explain this control by reference to Fig. 16, the damper ECU determines whether or not a brake pressure reducing operation performed using the ABS is underway based on an ABS operation signal obtained from the brake ECU. When the determination is affirmative, an attenuation force against falling is set to a maximum value by maximizing an amount of electricity supplied to the falling attenuation valve 102a.

As has been explained heretofore, the above-mentioned configuration is directed to the rocking control system of a rocking vehicle which includes: the pair of left and right front wheels 2; the front two-wheel suspension device 4 which rocks the left and right front wheels 2 in the lateral direction in response to rocking of the vehicle body in the lateral direction in a state where the left and right front wheels 2 are in contact with a ground; and the rocking damper 38 which imparts an attenuation force to the rocking of the vehicle body in the lateral direction, wherein the rocking damper 38 sets an attenuation force generated when the vehicle body is raised lower than an attenuation force generated when the vehicle body falls.

Due to such a constitution, when the vehicle body falls, an attenuation force is increased so that the falling of the vehicle body is made gentle. On the other hand, when the vehicle body is raised, an attenuation force is decreased so that the vehicle body can be raised smoothly. That is, a rider can surely have a light rolling feeling while maintaining the feeling of safety from rocking of the vehicle body.

In the above-mentioned configuration, the rocking damper 38 includes the hydraulic circuit 90 which controls the generation of an attenuation force. The hydraulic circuit 90 includes the attenuation valves 102a, 106a for generating an attenuation force in the oil passages (falling attenuation oil passage 102, the raising attenuation oil passage 106) through which working oil flows when the vehicle body is rocked. The attenuation valves 102a, 106a can change an attenuation force generated by the rocking damper 38. Accordingly, an attenuation force generated when the vehicle body is rocked can be adjusted corresponding to a desired vehicle state whereby a driver can further enhance a feeling of safety and a light feeling of the vehicle body.

Further, in the above-mentioned configuration, when a brake pressure reducing operation is performed using the ABS, the rocking damper 38 increases an attenuation force when the vehicle body falls and hence, it is possible to surely suppress the falling of the vehicle body when the ABS is operated.

Still further, in the above-mentioned configuration, by inhibiting an automatic transmission when the vehicle body rocks in the lateral direction, unintended transmission when the vehicle body is rocked can be inhibited so that it is possible to prevent the automatic transmission from influencing the rocking of the vehicle body in the lateral direction.

### <Second configuration of hydraulic circuit of rocking damper>

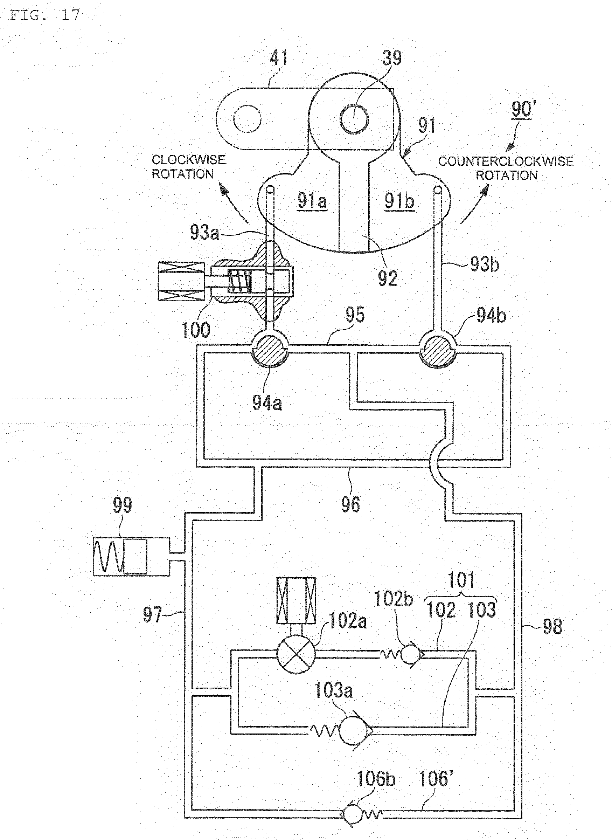

Next, a second configuration of the hydraulic circuit is explained by reference to Fig. 17.

A hydraulic circuit 90' of the second configuration differs from the hydraulic circuit of the first embodiment particularly with respect to a point that the hydraulic circuit 90' includes a raising oil passage 106' which includes only a check valve 106b in place of the raising attenuation circuit 105.

Other constitutional parts identical with the constitutional parts of the first embodiment are given the same symbols and detailed explanation of these parts is omitted.

In the second configuration, when a control valve 100 is energized so that a first oil passage 93a is brought into an open state whereby the vehicle body of the rocking vehicle falls either in the leftward direction or in the rightward direction, in the same manner as the first embodiment, working oil flows through a falling attenuation oil passage 102 of a falling attenuation circuit 101. Here, by operating a falling attenuation valve 102a, a flow resistance which working oil receives can be changed so that an attenuation force generated by a rocking damper 38 can be changed.

Further, when the vehicle body of the rocking vehicle is raised from a state where the vehicle body falls either in the leftward direction or in the rightward direction, working oil flows through the raising oil passage 106' which is adopted in place of the raising attenuation circuit 105. Here, there is no possibility that the rocking damper 38 positively generates an attenuation force.

The second configuration can, in addition to advantageous effects substantially equal to the advantageous effects acquired by the first embodiment, acquire the following advantageous effect. That is, the hydraulic circuit 90' includes the falling attenuation valve 102a for generating an attenuation force only in an oil passage through which working oil flows when the vehicle body falls (falling attenuation oil passage 102). Accordingly, an attenuation means such as a valve or the like can be eliminated from an oil passage through which working oil flows when the vehicle body is raised and hence, the rocking at the time of falling the vehicle body can be attenuated with the small number of constitutional parts.

### <Third configuration of hydraulic circuit of rocking damper>

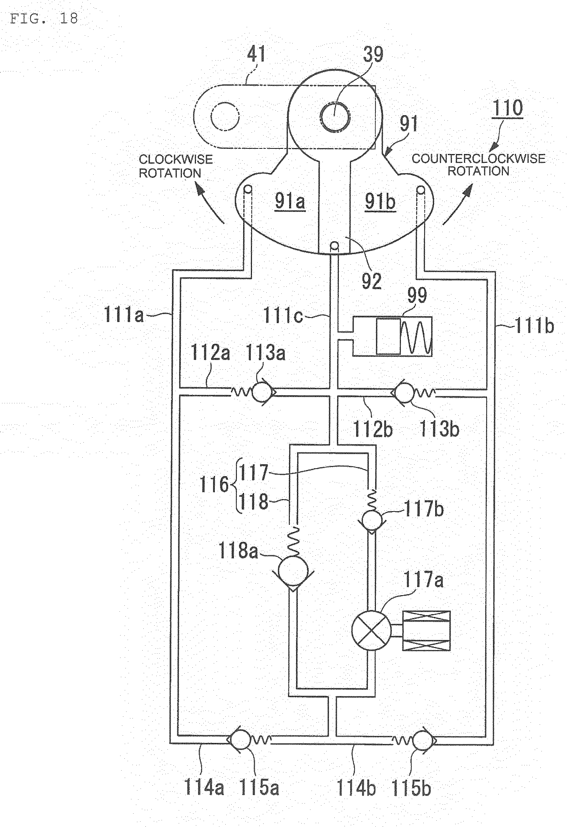

Next, the third configuration of the hydraulic circuit is explained by reference to Fig. 18. The constitutional parts identical with the constitutional parts of the first embodiment are given the same symbols and the detailed explanation of these parts is omitted.

A hydraulic circuit 110 of the third configuration includes: a first oil passage 111a and a second oil passage 111b which have proximal ends thereof respectively connected to both end portions of a sector-shaped oil chamber 91 in the circumferential direction; a third oil passage 111c which has a proximal end thereof connected to the center of the sector-shaped oil chamber 91 in the circumferential direction; a first intermediate communication oil passage 112a which extends between an intermediate portion of the first oil passage 111a and an intermediate portion of the third oil passage 111c; a second intermediate communication oil passage 112b which extends between an intermediate portion of the second oil passage 111b and an intermediate portion of the third oil passage 111c; a first communication oil passage 114a which extends between a distal end of the first oil passage 111a and a distal end of the third oil passage 111c; a second communication oil passage 114b which extends between a distal end of the second oil passage 111b and a distal end of the third oil passage 111c; and an attenuation circuit 116 which is disposed between the respective intermediate communication oil passages 112a, 112b and the respective communication oil passages 114a, 114b on a distal end side of the third oil passage 111c.

The first intermediate communication oil passage 112a includes a first intermediate check valve 113a constituting a check valve which allows the flow of working oil into the first oil passage 111a from the third oil passage 111c while not allowing the reverse flow of working oil. The second intermediate communication oil passage 112b includes a second intermediate check valve 113b constituting a check valve which allows the flow of working oil into the second oil passage 111b from the third oil passage 111c while not allowing the reverse flow of working oil.

The first communication oil passage 114a includes a first check valve 115a constituting a check valve which allows the flow of working oil into the third oil passage 111c from the first oil passage 111a while not allowing the reverse flow of working oil. The second communication oil passage 114b includes a second check valve 115b constituting a check valve which allows the flow of working oil into the third oil passage 111c from the second oil passage 111b while not allowing the reverse flow of working oil.

In the attenuation circuit 116, an attenuation oil passage 117 having an attenuation valve 117a which constitutes a solenoid valve and a check valve 117b, and a relief oil passage 118 having a relief valve 118a are arranged in parallel to each other. The attenuation valve 117a is a control valve which generates an attenuation force (resistance force) with respect to the rocking generated when the vehicle body falls either in the leftward direction or in the rightward direction or when the vehicle body is raised by throttling the flow passage or the like, and makes such an attenuation force changeable. The check valve 117b and the relief valve 118a are formed of a check valve which allows the flow of working oil from the respective communication oil passages 114a, 114b side to the respective intermediate communication oil passages 112a, 112b while not allowing the reverse flow of working oil. An accumulator 99 is connected to a proximal end side of the third oil passage 111c.

### <Manner of operation of third configuration>

Next, the manner of operation of the third configuration is explained.

Firstly, when the vehicle body of the rocking vehicle is in an upright state, the vane 92 is positioned at the center of the oil chamber, and when the vehicle body falls leftward from such a state, the rocking lever 41 and the damper rocking shaft 39 are rotated in the counterclockwise direction (in the drawing, clockwise direction), and the counterclockwise rotation oil chamber 91a becomes small due to the rocking of the vane 92. Due to such a constitution, working oil in the counterclockwise rotation oil chamber 91a reaches the first oil passage 111a, and returns to the inside of the expanded clockwise rotation oil chamber 91b through the first communication oil passage 114a and the third oil passage 111c including the attenuation circuit 116.

On the other hand, when the vehicle body of the rocking vehicle falls rightward, the rocking lever 41 and the damper rocking shaft 39 are rotated in the clockwise direction (in the counterclockwise direction in the drawing), and the clockwise rotation oil chamber 91b becomes small due to the rocking of the vane 92. Due to such a constitution, working oil in the clockwise rotation oil chamber 91b reaches the second oil passage 111b, and returns to the inside of the expanded counterclockwise rotation oil chamber 91a through the second communication oil passage 114b and the third oil passage 111c including the attenuation circuit 116. Here, a small amount of working oil in the third oil passage 111c also flows into the first intermediate communication oil passage 112a and the first oil passage 111a and hence, working oil returns to the inside of the counterclockwise rotation oil chamber 91a also through these oil passages.

That is, also when the vehicle body of the rocking vehicle falls in either in the leftward direction or in the rightward direction, working oil flows through the attenuation oil passage 117 of the attenuation circuit 116. Here, by operating an attenuation valve 117a, a flow resistance which working oil receives can be changed so that an attenuation force generated by a rocking damper 38 can be changed. When the attenuation oil passage 117 is closed for some reasons, working oil opens the relief valve 118a of the relief oil passage 118 and flows through the relief oil passage 118.

When the vehicle body intends to raise rightward from a leftwardly falling state, the rocking lever 41 and the damper rocking shaft 39 are rotated in the clockwise direction (in the counterclockwise direction in the drawing), and the clockwise rotation oil chamber 91b becomes small due to the rocking of the vane 92. Due to such a constitution, working oil in the clockwise rotation oil chamber 91b flows through the third oil passage 111c, the first intermediate communication oil passage 112a, and the first oil passage 111a, and returns to the expanded counterclockwise rotation oil chamber 91a.

Although there exists a path where working oil in the clockwise rotation oil chamber 91b flows through the second oil passage 111b and the second communication oil passage 114b, and returns to the counterclockwise rotation oil chamber 91a after flowing through the third oil passage 111c including the attenuation circuit 116, the check valves 113a, 113b of the respective intermediate communication oil passages 112a, 112b are set to be opened at an oil pressure lower than an oil pressure in the check valves 115a, 115b of the respective communication oil passages 114a, 114b and hence, there is no possibility that working oil in the clockwise rotation oil chamber 91b returns to the counterclockwise rotation oil chamber 91a after flowing through the second oil passage 111b, the second communication oil passage 114b, and the attenuation circuit 116.

On the other hand, when the vehicle body intends to raise leftward from a rightwardly falling state, the rocking lever 41 and the damper rocking shaft 39 are rotated in the counterclockwise direction (in the clockwise direction in the drawing), and the counterclockwise rotation oil chamber 91a becomes small due to the rocking of the vane 92. Due to such a constitution, working oil in the counterclockwise rotation oil chamber 91a flows through the third oil passage 111c, the second intermediate communication oil passage 112b and the second oil passage 111b, and returns to the expanded clockwise rotation oil chamber 91b.

Although there exists a path where working oil in the counterclockwise rotation oil chamber 91a flows through the first oil passage 111a and the first communication oil passage 114a, and returns to the clockwise rotation oil chamber 91b after flowing through the third oil passage 111c including the attenuation circuit 116, due to the setting of the respective check valves 113a, 113b, 115a, 115b described previously, there is no possibility that working oil in the counterclockwise rotation oil chamber 91a reaches to the clockwise rotation oil chamber 91b after flowing through the first oil passage 111a, the first communication oil passage 114a, and the attenuation circuit 116.

That is, also when the vehicle body is raised from a state where the vehicle body falls either in the leftward direction or in the rightward direction, working oil does not flow through the attenuation circuit 116 so that there is no possibility that the rocking damper 38 positively generates an attenuation force.

Also in the rocking control system of the rocking vehicle according to the third configuration, in the same manner as the first embodiment, it is possible to realize both the feeling of safety and the light rolling feeling of the vehicle body. Further, an attenuation force which is generated when the vehicle body falls can be adjusted corresponding to an arbitral vehicle state.

For example, in the first and second configurations of the hydraulic circuit, the control valve 100 may be provided to the second oil passage 93b.

In this configuration, the explanation has been made with respect to an example where the invention is applied to the rocking three-wheeled vehicle which includes the pair of left and right front wheels on the front portion of the vehicle body, and includes the single rear wheel on the rear portion of the vehicle body. However, the invention is also applicable to a rocking three-wheeled vehicle which includes a single front wheel on a front portion of a vehicle body and includes a pair of left and right rear wheels on a rear portion of the vehicle body or a rocking four-wheeled vehicle which includes a pair of left and right front wheels on a front portion of a vehicle body and includes a pair of left and right rear wheels on a rear portion of the vehicle body.

### Description of Reference Numerals and Signs:

1: saddle-ride-type vehicle (rocking vehicle)
2: front wheel (wheel)
4: front two-wheel suspension device (rocking mechanism)
38: rocking damper
90, 90', 110: hydraulic circuit
102: falling attenuation oil passage (oil passage through which working oil flows when vehicle body is rocked, oil passage through which working oil flows when vehicle body falls)
102a: falling attenuation valve (attenuation valve)
106: raising attenuation oil passage (oil passage through which working oil flows when vehicle body is rocked)
106a: raising attenuation valve (attenuation valve)
117: attenuation oil passage (oil passage through which working oil flows when vehicle body is rocked, oil passage through which working oil flows when vehicle body falls) 117a: attenuation valve

## Claims

1. A saddle type rocking vehicle comprising a rocking control system comprising:
a pair of left and right wheels (2);
a rocking mechanism (4) which rocks the pair of left and right wheels (2) in the lateral direction in response to rocking of a vehicle body in the lateral direction in a state where the left and right wheels (2) are in contact with a ground; and
a rocking damper (38) which imparts an attenuation force to the rocking of the vehicle body in the lateral direction,
wherein the rocking damper comprises a hydraulic circuit (90),
**characterized in that**
the hydraulic circuit (90) comprises
- a sector-shaped oil chamber (91),
- a first oil passage (93a), and a second oil passage (93b), each having a proximal end thereof connected to both end portions of the sector-shaped oil chamber (91) in the circumferential direction respectively,
- a first rotary valve (94a) and a second rotary valve (94b) to which distal ends of the respective first and second oil passages (93a, 93b) are connected respectively, wherein the first rotary valve (94a) and the second rotary valve (94b) are three-way valves,
- a first communication oil passage (95) which extends between one port out of two ports which are opened and closed by the first rotary valve (94a) and one port out of two ports which are opened and closed by the second rotary valve (94b),
- a second communication oil passage (96) which extends between the other port which is opened and closed by the first rotary valve (94a) and the other port which is opened and closed by the rotary valve (94b),
- a falling upstream oil passage (97) which has a proximal end thereof connected to the first communication passage (95),
- a raising upstream oil passage (98) which has a proximal end thereof connected to the second communication passage (96),
- a falling attenuation circuit (101) and a raising attenuation circuit (105) which extend between distal end sides of the falling upstream oil passage (97) and the raising upstream oil passage (98),
the first and second rotary valves (94a, 94b) are each conjured such that a valve element is rotatably disposed in the inside of a cylindrical body,
the first oil passage (93a), the first communication oil passage (95) and the second communication oil passage (96) are connected to the first rotary valve (94a),
the first oil passage (93a) and either one of the first communication oil passage (95) and the second communication oil passage (96) are selectively communicated with each other due to the rotation of the respective valve element,
the second oil passage (93b), the first communication oil passage (95) and the second communication oil passage (96) are connected to the second rotary valve (94b),
the second oil passage (93b) and either one of the first communication oil passage (95) and the second communication oil passage (96) are selectively communicated with each other due to the rotation of the respective valve element,
in the falling attenuation circuit (101), a falling attenuation oil passage (102) having a falling attenuation valve (102a) which constitutes a solenoid valve, a check valve (102b), and a relief oil passage (103) having a relief valve (103a) are arranged parallel to each other,
the falling attenuation valve (102a) is a control valve which generates an attenuation force with respect to the rocking generated when the vehicle body falls either in the leftward direction or in the rightward direction by throttling a flow passage, and makes such an attenuation force variable, the check valve (102b) and the relief valve (103a) are formed of a check valve which allows the flow of working oil from the falling upstream oil passage (97) to the raising upstream oil passage (98) while not allowing the flow of working oil in the reverse direction,
in the raising attenuation circuit (105), a raising attenuation oil passage (106) having a raising attenuation valve (106a) which constitutes a solenoid valve, a check valve (106b), and a relief oil passage (107) having a relief valve (107a) are arranged parallel to each other,
the raising attenuation valve (106a) is a control valve which generates an attenuation force with respect to the rocking generated when the vehicle body which falls either in the leftward direction or in the rightward direction by throttling a flow passage is raised, and makes such an attenuation force variable, the check valve (106b) and the relief valve (107a) are formed of a check valve which allows the flow of working oil from the raising upstream oil passage (98) to the falling upstream oil passage (97) while not allowing the flow of working oil in the reverse direction,
the hydraulic circuit (90) further comprises an accumulator (99) which is connected to the raising upstream oil passage (98), wherein the accumulator (99) absorbs a change in capacitance of working oil in the hydraulic circuit (90) due to the expansion or shrinkage of working oil, and
the rocking damper (38) sets an attenuation force generated when the vehicle body is raised lower than an attenuation force generated when the vehicle body falls.

2. The saddle type rocking vehicle according to claim 1, wherein the rocking damper (38) includes a hydraulic circuit (90, 90', 110) which controls the generation of the attenuation force,
the hydraulic circuit (90, 90', 110) includes the attenuation means (102a, 106a, 117a) in an oil passage (102, 106, 117) through which working oil flows when the vehicle body is rocked, and
the attenuation means (102a, 106a, 117a) is capable of changing an attenuation force generated by the rocking damper (38) corresponding to a vehicle speed.

3. The saddle type rocking vehicle according to any one of claims 1 to 2, wherein the rocking vehicle (1) includes an anti-lock brake system, and
the rocking damper (38) increases an attenuation force at the time of falling of the vehicle body when the anti-lock brake system performs a brake pressure reducing operation.

4. The saddle type rocking vehicle according to any one of claims 1 to 3, wherein the rocking vehicle (1) includes: a detection means which detects a lateral rocking angle of the vehicle body; and an electronically controlled automatic transmission, wherein the automatic transmission inhibits an automatic transmission when a detection value of the detection means is predetermined value or more.

## Patentansprüche

1. Schaukelfahrzeug des Sattelsitztyps mit einem Schaukelsteuerungssystem, das aufweist:
ein Paar eines linken und rechten Rades (2);
einen Schaukelmechanismus (4), der das Paar des linken und rechten Rades (2) in der seitlichen Richtung in Reaktion auf das Schaukeln einer Karosserie in der seitlichen Richtung in einem Zustand schaukelt, in dem das linke und rechte Rad (2) Bodenkontakt haben; und
eine Schaukeldämpfung (38), die eine Dämpfungskraft auf das Schaukeln der Karosserie in seitlicher Richtung überträgt,
wobei die Schaukeldämpfung einen Hydraulikkreislauf (90) aufweist,
**dadurch gekennzeichnet, dass**
der Hydraulikkreislauf (90) aufweist
- eine sektorförmige Ölkammer (91),
- eine erste Ölleitung (93a) und eine zweite Ölleitung (93b), von denen jeweils ein proximales Ende davon mit beiden Endbereichen der sektorförmigen Ölkammer (91) jeweils in der Umfangsrichtung verbunden ist,
- ein erstes Drehventil (94a) und ein zweites Drehventil (94b), an denen jeweils die distalen Enden der zugehörigen ersten und zweiten Ölleitung (93a, 93b) angeschlossen sind, wobei das erste Drehventil (94a) und das zweite Drehventil (94b) Dreiwegeventile sind,
- eine erste Ölverbindungsleitung (95), die zwischen einer Öffnung von zwei Öffnungen, die durch das erste Drehventil (94a) geöffnet und geschlossen werden, und einer Öffnung von zwei Öffnungen, die durch das zweite Drehventil (94b) geöffnet und geschlossen werden, verläuft,
- eine zweite Ölverbindungsleitung (96), die zwischen der anderen Öffnung, die durch das erste Drehventil (94a) geöffnet und geschlossen wird, und der anderen Öffnung, die durch das Drehventil (94b) geöffnet und geschlossen wird, verläuft,
- eine vorgelagerte Absenkungsölleitung (97), von der ein proximales Ende davon mit der ersten Verbindungsleitung (95) verbunden ist,
- eine vorgelagerte Aufrichtungsölleitung (98), von der ein proximales Ende davon mit der zweiten Verbindungsleitung (96) verbunden ist,
- ein Absenkungsdämpfungskreislauf (101) und ein Aufrichtungsdämpfungskreislauf (105), die sich zwischen distalen Endseiten der vorgelagerten Absenkungsölleitung (97) und der vorgelagerten Aufrichtungsölleitung 98 erstrecken,
das erste und zweite Drehventil (94a, 94b) jeweils so ausgebildet sind, dass ein Ventilelement rotierbar in der Innenseite eines zylindrischen Körpers angeordnet ist,
die erste Ölleitung (93a), die erste Ölverbindungsleitung (95) und die zweite Ölverbindungsleitung (96) mit dem ersten Drehventil (94a) verbunden sind,
die erste Ölleitung (93a) und eine von der ersten Ölverbindungsleitung (95) und der zweiten Ölverbindungsleitung (96) in selektiver Weise aufgrund der Rotation des entsprechenden Ventilelements miteinander in Verbindung stehen,
die zweite Ölleitung (93b), die erste Ölverbindungsleitung (95) und die zweite Ölverbindungsleitung (96) mit dem zweiten Drehventil (94a) verbunden sind,
die zweite Ölleitung (93b) und eine von der ersten Ölverbindungsleitung (95) und der zweiten Ölverbindungsleitung (96) aufgrund der Rotation des entsprechenden Ventilelements in selektiver Weise miteinander in Verbindung stehen,
in dem Absenkungsdämpfungskreislauf (101) eine Absenkungsdämpfungsölleitung (102) mit einem Absenkungsdämpfungsventil (102a), das ein Magnetventil bildet, ein Absperrventil (102b) und eine Ölüberdruckleitung (103) mit einem Überdruckventil (103a) parallel zueinander angeordnet sind,
das Absenkungsdämpfungsventil (102a) ein Steuerventil ist, das eine Dämpfungskraft bezüglich des Schaukelns erzeugt, das erzeugt wird, wenn die Karosserie durch Drosseln einer Flussleitung entweder nach links oder nach rechts absinkt, und eine solche Dämpfungskraft variabel gestaltet,
das Absperrventil (102b) und das Überdruckventil (103a) als ein Absperrventil ausgebildet sind, das den Fluss des Betriebsöls von der vorgelagerten Absenkungsölleitung (97) zur vorgelagerten Aufrichtungsölleitung (98) gestattet, während der Fluss des Betriebsöls in die umgekehrte Richtung nicht gestattet ist,
in dem Aufrichtungsdämpfungskreislauf (105) eine Aufrichtungsdämpfungsölleitung (106) mit einem Aufrichtungsdämpfungsventil (106a), das ein Magnetventil bildet, ein Absperrventil (106b) und eine Ölüberdruckleitung (107) mit einem Überdruckventil (107a) parallel zueinander angeordnet sind,
das Aufrichtungsdämpfungsventil (106a) ein Steuerventil ist, das eine Dämpfungskraft bezüglich des Schaukelns erzeugt, das erzeugt wird, wenn die Karosserie, die durch Drosseln einer Flussleitung entweder nach links oder nach rechts absinkt, sich aufrichtet, und eine solche Dämpfungskraft variabel gestaltet,
das Absperrventil (106b) und das Überdruckventil (107a) als ein Absperrventil ausgebildet sind, das den Fluss des Betriebsöls von der vorgelagerten Aufrichtungsölleitung (98) zur vorgelagerten Absenkungsölleitung (97) gestattet, während der Fluss des Betriebsöls in die umgekehrte Richtung nicht gestattet ist,
der Hydraulikkreislauf (90) weiterhin einen Speicher (99) aufweist, der mit der vorgelagerten Aufrichtungsölleitung (98) verbunden ist, wobei der Speicher (99) eine Änderung in der Kapazität des Betriebsöls im Hydraulikkreislauf (90) aufgrund der Ausdehnung oder der Verminderung des Betriebsöls auffängt, und
die Schaukeldämpfung (38) eine Dämpfungskraft, die beim Aufrichten der Karosserie erzeugt wird, niedriger einstellt als eine Dämpfungskraft, die beim Absinken der Karosserie generiert wird.

2. Schaukelfahrzeug des Sattelsitztyps nach Anspruch 1,
wobei die Schaukeldämpfung (38) einen Hydraulikkreislauf (90, 90', 110) aufweist, der die Erzeugung der Dämpfungskraft steuert,
der Hydraulikkreislauf (90, 90', 110) Dämpfungsmittel (102a, 106a, 117a) in einer Ölleitung (102, 106, 117) aufweist, durch den das Betriebsöl fließt, wenn die Karosserie geschaukelt wird, und
das Dämpfungsmittel (102a, 106a, 117a) dazu ausgestaltet ist, eine Dämpfungskraft zu ändern, die von der Schaukeldämpfung (38) entsprechend einer Fahrzeuggeschwindigkeit erzeugt wird.

3. Schaukelfahrzeug des Sattelsitztyps nach einem der Ansprüche 1 bis 2,
wobei das Schaukelfahrzeug (1) ein Antiblockierbremssystem aufweist, und die Schaukeldämpfung (38) eine Dämpfungskraft zum Zeitpunkt des Absinkens der Karosserie erhöht, wenn das Antiblockierbremssystem eine Verringerungsoperation des Bremsdrucks durchführt.

4. Schaukelfahrzeug des Sattelsitztyps nach einem der Ansprüche 1 bis 3,
wobei das Schaukelfahrzeug (1) umfasst:
ein Erfassungsmittel, das einen seitlichen Schaukelwinkel der Karosserie erfasst; und ein elektronisch gesteuertes Automatikgetriebe, wobei das Automatikgetriebe eine automatische Schaltung unterbindet, wenn ein Erfassungswert des Erfassungsmittels gleich oder höher einem bestimmten Wert ist.

## Revendications

1. Véhicule à bascule à selle comprenant un système de commande de basculement comprenant :
une paire de roues droite et gauche (2) ;
un mécanisme de basculement (4) qui fait basculer la paire de roues gauche et droite (2) dans la direction latérale en réaction au basculement d'un châssis de véhicule dans la direction latérale dans un état dans lequel les roues gauche et droite (2) sont en contact avec un sol ; et
un amortisseur de basculement (38) qui transmet une force d'atténuation au basculement du châssis de véhicule dans la direction latérale,
dans lequel l'amortisseur de basculement comprend un circuit hydraulique (90),
**caractérisé en ce que**
le circuit hydraulique (90) comprend
- une chambre d'huile en forme de secteur (91),
- un premier passage d'huile (93a), et un second passage d'huile (93b), qui possèdent chacun une extrémité proximale qui est reliée aux deux parties d'extrémité de la chambre d'huile en forme de secteur (91) dans la direction circonférentielle, respectivement,
- un premier clapet rotatif (94a) et un second clapet rotatif (94b) auxquels les extrémités distales du premier et du second passages d'huile respectifs (93a, 93b) sont reliées respectivement, le premier clapet rotatif (94a) et le second clapet rotatif (94b) étant des clapets à trois voies,
- un premier passage d'huile de communication (95) qui s'étend entre un orifice parmi deux orifices qui sont ouverts et fermés par le premier clapet rotatif (94a) et un orifice parmi deux orifices qui sont ouverts et fermés par le second clapet rotatif (94b),
- un second passage d'huile de communication (96) qui s'étend entre l'autre orifice qui est ouvert et fermé par le premier clapet rotatif (94a) et l'autre orifice qui est ouvert et fermé par le clapet rotatif (94b),
- un passage d'huile amont descendant (97) dont une extrémité proximale est reliée au premier passage de communication (95),
- un passage d'huile amont montant (98) dont une extrémité proximale est reliée au second passage de communication (96),
- un circuit d'atténuation descendant (101) et un circuit d'atténuation montant (105) qui s'étendent entre les côtés d'extrémité distale du passage d'huile amont descendant (97) et du passage d'huile amont montant (98),
le premier et le second clapets rotatifs (94a, 94b) sont chacun conçus de sorte qu'un élément de clapet soit disposé de manière rotative à l'intérieur d'un corps cylindrique,
le premier passage d'huile (93a), le premier passage d'huile de communication (95) et le second passage d'huile de communication (96) sont reliés au premier clapet rotatif (94a),
le premier passage d'huile (93a) et n'importe lequel du premier passage d'huile de communication (95) et du second passage d'huile de communication (96) communiquent sélectivement l'un avec l'autre en raison de la rotation de l'élément de clapet respectif,
le second passage d'huile (93b), le premier passage d'huile de communication (95) et le second passage d'huile de communication (96) sont reliés au second clapet rotatif (94b),
le second passage d'huile (93b) et n'importe lequel du premier passage d'huile de communication (95) et du second passage d'huile de communication (96) communiquent sélectivement l'un avec l'autre en raison de la rotation de l'élément de clapet respectif,
dans le circuit d'atténuation descendant (101), un passage d'huile d'atténuation descendant (102) qui possède un clapet d'atténuation descendant (102a) qui constitue un clapet à solénoïde, un clapet anti-retour (102b), et un passage d'huile de sécurité (103) qui possède un clapet de sécurité (103a) sont prévus parallèlement les uns aux autres,
le clapet d'atténuation descendant (102a) est un clapet de régulation qui génère une force d'atténuation par rapport au basculement généré lorsque le châssis du véhicule s'incline vers la gauche ou vers la droite en rétrécissant un passage d'écoulement, et rend cette force d'atténuation variable,
le clapet anti-retour (102b) et le clapet de sécurité (103a) sont formés d'un clapet anti-retour qui permet l'écoulement de l'huile entre le passage d'huile amont descendant (97) et le passage d'huile amont montant (98) tout en empêchant l'écoulement de l'huile dans le sens inverse,
dans le circuit d'atténuation montant (105), un passage d'huile d'atténuation montant (106) qui possède un clapet d'atténuation montant (106a) qui constitue un clapet à solénoïde, un clapet anti-retour (106b), et un passage d'huile de sécurité (107) qui possède un clapet de sécurité (107a) sont prévus parallèlement les uns aux autres,
le clapet d'atténuation montant (106a) est un clapet de régulation qui génère une force d'atténuation par rapport au basculement généré lorsque le châssis du véhicule qui s'incline vers la gauche ou vers la droite en rétrécissant un passage d'écoulement est remonté, et rend cette force d'atténuation variable,
le clapet anti-retour (106b) et le clapet de sécurité (107a) sont formés d'un clapet anti-retour qui permet l'écoulement de l'huile entre le passage d'huile amont montant (98) et le passage d'huile amont descendant (97) tout en empêchant l'écoulement de l'huile dans le sens inverse,
le circuit hydraulique (90) comprend en outre un accumulateur (99) qui est relié au passage d'huile amont montant (98), l'accumulateur (99) absorbant un changement de capacitance de l'huile dans le circuit hydraulique (90) en raison de la dilatation ou de la rétraction de l'huile, et
l'amortisseur de basculement (38) définit une force d'atténuation générée lorsque le châssis du véhicule est levé inférieure à une force d'atténuation générée lorsque le châssis du véhicule tombe.

2. Véhicule à bascule à selle selon la revendication 1, dans lequel l'amortisseur de basculement (38) comprend un circuit hydraulique (90, 90', 110) qui contrôle la génération de la force d'atténuation,
le circuit hydraulique (90, 90', 110) comprend le moyen d'atténuation (102a, 106a, 117a) dans un passage d'huile (102, 106, 117) dans lequel l'huile s'écoule lorsque le châssis du véhicule est basculé, et
le moyen d'atténuation (102a, 106a, 117a) est capable de modifier une force d'atténuation générée par l'amortisseur de basculement (38) qui correspond à une vitesse du véhicule.

3. Véhicule à bascule à selle selon l'une quelconque des revendications 1 à 2, dans lequel le véhicule à bascule (1) comprend un système de frein antiblocage, et
l'amortisseur de basculement (38) augmente une force d'atténuation au moment de la chute du châssis du véhicule lorsque le système de frein antiblocage effectue une opération de réduction de la pression de freinage.

4. Véhicule à bascule à selle selon l'une quelconque des revendications 1 à 3, dans lequel le véhicule à bascule (1) comprend : un moyen de détection qui détecte un angle de basculement latéral du châssis du véhicule ; et une transmission automatique à commande électronique, la transmission automatique empêchant une transmission automatique lorsqu'une valeur de détection du moyen de détection est une valeur prédéterminée ou plus.
